# EUROPEAN PATENT APPLICATION

(11) **EP 4 230 036 A1**
(43) Date of publication of application: **23.08.2023**
(21) Application number: 22157513.7
(22) Date of filing: 18.02.2022
(51) Int. Cl.: A01M 7/00, A01M 21/04

(54) **TARGETED TREATMENT OF SPECIFIC WEED SPECIES WITH MULTIPLE TREATMENT DEVICES**

(71) Applicant: BASF Agro Trademarks GmbH, 67063 Ludwigshafen am Rhein (DE)
(72) Inventor: The designation of the inventor has not yet been filed
(74) Representative: BASF IP Association

(57) **Abstract**

The present disclosure relates to targeted treatment of specific weed species with multiple treatment devices. Provided is a system and computer-implemented method for controlling operation of multiple treatment devices (102, 103, 104, 107) having treatment device configurations different to each other for treating an agricultural field (112). The method comprises analyzing field data, monitored as at least one of the multiple treatment devices (102, 103, 104, 107) traverses the field, to identify weed present at a certain field location (113) of the field (112) by weed species; and targeted instructing at least one treatment device (102, 103, 104, 107) among the multiple treatment devices (102, 103, 104, 107) that has a matching treatment device configuration for an identified weed species to treat the field (112) at the corresponding certain field location (113) against the identified weed species.

## Description

### TECHNICAL FIELD

The present disclosure relates to computer-aided treatment of agricultural fields. In particular, it relates to a computer-implemented method for controlling operation of multiple treatment devices having treatment device configurations different to each other for treating an agricultural field, a corresponding system, methods of weed treatment, and a computer program element.

### TECHNICAL BACKGROUND

The general background of this disclosure is the treatment of plants in an agricultural field, which may be an agricultural field, a greenhouse, or the like. The treatment of plants, such as the cultivated crops, may also comprise treatment of weeds present in the agricultural field, treatment of insects present in the agricultural field or treatment of pathogens present in the agricultural field.

To make farming more sustainable and reduce environmental impact precision farming technology is being developed. Here a semi-automated or fully automated plant treatment device, such as a drone, a robot, a ground-operated smart sprayer, or the like, may be configured to treat weeds, insects and/or the pathogens in the agricultural field based on ecological and economical rules. The technological developments in the field of drones or in robotics enable new treatment schemes for farmers.

In practice, a field to be treated may have different field conditions from field section to field section or within one field section, i.e. a diversity of field conditions. For example, different field sections or locations within the field may host or show different weeds, insects and/or pathogens that cannot be treated uniformly, i.e. with on-board resources alone, or be subject to different restrictions, such as spatial, geometric, legal, etc., which also do not allow uniform treatment across the entire field, i.e. across all field sections.

For example, US 2017/0258005 A1 describes a system comprising a mobile-monitoring device and a mobile-deployment device. The mobile-monitoring device and/or a static monitoring device monitors target plants and a central computer identifies what plants to target. Based on the information, the central computer determines that the targets plants require treatment. A message is then sent to the mobile-deployment device to treat the target plants. A drawback is that the mobile-deployment device is only configured to specifically treat the target plants and cannot easily respond to different field conditions, while the mobile-monitoring device is not capable for treatment.

US 2019/0166752 A1 describes a system that comprises a monitoring unmanned aerial vehicle and an agricultural aircraft. An aerial application task management server positions the monitoring unmanned aerial vehicle at an altitude above agricultural aircraft to monitor performance of the agricultural aircraft via data received from an imaging sensor of the monitoring unmanned aerial vehicle while agricultural aircraft performs an aerial application task by using a product applicator apparatus to deploy a product over a target area. Again, a drawback is that the agricultural aircraft operates with a specific configuration and cannot easily respond to different field conditions, while the monitoring unmanned aerial vehicle is not capable for treatment.

US 2019/0116726 A1 describes an agricultural sprayer having a tank storing material to be sprayed and having mounted a set of unmanned aerial vehicles (UAVs). The UAVs comprise sensors and are positioned in monitor areas so as to detect an overspray of the material sprayed by the agricultural sprayer. Again, a drawback is that the agricultural sprayer is operated with a specific configuration and cannot easily respond to different field conditions, while the UAVs are not capable for treatment.

Therefore, there may still be a need to better address the diversity of field conditions.

### SUMMARY OF THE INVENTION

It is an object of the present invention to improve addressing a diversity of field conditions. The object of the present invention is solved by the subject matter of the independent claims, wherein further embodiments are incorporated in the dependent claims.

In a first aspect, there is provided a computer-implemented method for controlling operation of multiple treatment devices having treatment device configurations different to each other for treating an agricultural field.

The method comprises the step of analyzing field data, monitored as at least one of the multiple treatment devices traverses the field, to identify weed present at a certain field location of the field by weed species. As a further step, the method comprises targeted instructing at least one treatment device among the multiple treatment devices that has a matching treatment device configuration for an identified weed species to treat the field at the corresponding certain field location against the identified weed species.

In this way, the diversity of the field or field conditions, i.e., the different field condition-dependent requirements for the treatment of the field, can be better addressed, since for different weed species the appropriate or most suitable treatment device can be determined and/or instructed. Further, the treatment of the field can be more efficient, because it may be determined, while a first treatment device of the multiple treatment devices is still traversing the field, that its first device configuration is not suitable for the treatment of the certain field location hosting a specific weed species, and thereupon the certain field location and/or knowledge about the specific weed species can be used as information, trigger, instruction, or the like, for instructing a second treatment device of the multiple devices, is at least more suitable for the treatment due to its second device configuration. Also, the certain field location can be treated promptly by the second treatment device while the first treatment device is still traversing the field and/or treating a number of other field locations. In other words, the second treatment device can substitute for the treatment where the first treatment device, due to its device configuration, is not suitable for treatment against a specific weed species.

In yet other words, a multi-device treatment of an agricultural field is proposed herein in which, depending on the individual device configuration, the most suitable treatment device is used to treat the certain field location or a certain weed species, respectively. For example, the device configurations of the individual treatment devices may be tailored to a particular weed species, e.g., by a specific treatment mechanism, such as product spraying, mechanical, electrical, etc., such that a first treatment device may be applicable or configured to treat a first weed species, and a second treatment device may be applicable or configured to treat a different, second weed species. That is, a first treatment device may be equipped with or configured for a treatment technique and/or treatment product, which may contained in a tank of the first treatment device, that may not necessarily cover all weed species equally, so that specific weed species, critical weeds, and/or resistant weeds cannot be treated by the first treatment device, at least not by using the first treatment device alone or in an efficient way. For instance, the first treatment device may carry a product, tank mix, etc., that is not effective against resistant weeds, certain weed classes or weed classes that should undergo a different treatment mechanism than spraying, e.g. mechanical treatment or the like. As a consequence, certain weeds may not be controlled and classified as left overs. These not controlled weeds can be identified immediately after a treatment or even without any treatment by using the first treatment device, and a more suitable second treatment device may can be targeted instructed to treat the identified weed (species).

It is noted that a first treatment device of the multiple treatment device may carry at least one further, second treatment device on-board, i.e. piggyback and transport it, until the second treatment device - in particular instead of the first treatment device - is instructed to treat the field at the certain field location due to its at least more suitable device configuration. Also, two or more further treatment devices may be carried by the first treatment device. The first treatment device may comprise, for example, a holder, docking station or the like adapted to hold the second treatment device before or after its operation. Alternatively or additionally, the further treatment device may start its operation from a place remote to the first treatment device, i.e. a place which is not at or on the first treatment device, such as a hub, base, or the like, for one or more treatment devices. It is further noted that in principle each of the multiple treatment devices is configured for treatment of the field and not only for monitoring, but at least in part have a device configuration different from each other.

The treatment device may be configured to traverse the agricultural field. The treatment device may be a ground vehicle, which either has its own drive or is towed by a towing vehicle, an air vehicle, a rail vehicle, a robot, an aircraft, an unmanned aerial vehicle (UAV), a drone, or the like. The treatment device may be equipped with one or more treatment unit(s) and/or one or more monitoring unit(s), e.g. detection means, sensors, or the like. The treatment device may be configured to collect field data via the treatment and/or monitoring unit. The treatment device may be configured to sense field data of the agricultural field via the monitoring unit. The treatment device may be configured to treat the agricultural field via the treatment unit. Treatment unit(s) may be operated based on monitoring signals provided by the monitoring unit(s) of the treatment device. The treatment device may comprise a communication unit for connectivity. Via the communication unit the treatment device may be configured to provide, receive or send field data, to provide, send or receive operation data and/or to provide, send or receive operation data, e.g. in form of data packets, messages, etc.

The multiple treatment devices may be of different types, e.g. a first one may be a ground vehicle, a second one may be an UAV or the like. However, multiple treatment devices may be of a same type, such as an UAV or any other of the above types, but may have different device configurations in terms of treatment, e.g. different treatment mechanisms, different treatment products loaded, etc.

As used herein, the term treatment device may be understood as or may comprise any device configured to treat an agricultural field. The treatment device may be configured to traverse the agricultural field. The treatment device may be a ground vehicle, which either has its own drive or is towed by a towing vehicle, an air vehicle, a rail vehicle, a robot, an aircraft, an unmanned aerial vehicle (UAV), a drone, or the like. The treatment device may be equipped with one or more treatment unit(s) and/or one or more monitoring unit(s), e.g. detection means, sensors, or the like. The treatment device may be configured to collect field data via the treatment and/or monitoring unit. The treatment device may be configured to sense field data of the agricultural field via the monitoring unit. The treatment device may be configured to treat the agricultural field via the treatment unit. Treatment unit(s) may be operated based on monitoring signals provided by the monitoring unit(s) of the treatment device. The treatment device may comprise a communication unit for connectivity. Via the communication unit the treatment device may be configured to provide, receive or send field data, to provide, send or receive operation data and/or to provide, send or receive operation data, e.g. in form of data packets, messages, etc.

The term treatment may be understood broadly as and may relate to any treatment of weeds in agriculture, in terms of controlling of weed(s). Treatment may include any treatment to be conducted during a season on an agricultural field such as applying a treatment product, such as an herbicide, e.g. selective herbicide, broadband, a non-selective or broad spectrum or total herbicide, etc., providing mechanical treatment, electrical treatment, or any other suitable mechanism suitable for the control of weed. In this regard, a selective herbicide may be a herbicide formulated to control specific weeds, weed species or weed categories, and is generally toxic to those weeds but less toxic to other plants. For example, a selective herbicide may be a monocotyledon or a dicotyledon herbicide. A non-selective herbicide, also referred to as a broadband or broad spectrum herbicide, may be formulated to control both broadleaf and grass weeds, such as Glyphosate.

Field data may be understood broadly and may comprise any data that may be obtained by the first and/or second treatment device. Field data may be obtained from the treatment unit and/or the monitoring unit of the treatment device. Field data may comprise measured data obtained by the treatment device. Field data may comprise monitoring unit data configured to control or for controlling the monitoring unit of the treatment device. Field data may comprise treatment unit data configured to control or for controlling the treatment unit of the treatment device. Field data may comprise data from which a field condition on the agricultural field may be derived. Field data may comprise data related to an treatment and/or monitoring operation of the treatment device. Field data may comprise data from which a monitoring or treatment status of the at least one section may be derived. Field data may comprise image data, spectral data, section data based on which sections may be analyzed or sections may be flagged with e.g. a monitoring or a treatment status, crop data, weed data, soil data, geographical data, trajectory data of the treatment device, measured environmental data (e.g. humidity, airflow, temperature, and sun radiation), and treatment data relating to the treatment operation. The field data may be associated with a section such as location or position in the agricultural field. Field data may be section specific such as location or position specific data associated with a specific section such as location or position in the agricultural field.

The term agricultural field may be understood broadly and may refer to an agricultural field to be treated. The agricultural field may be any plant or crop cultivation area, such as a farming field, a greenhouse, or the like. It may also include any area to be treated such as a rail way, a street side stipes or the like. A plant may be a crop, a weed, a volunteer plant, a crop from a previous growing season, a beneficial plant or any other plant present on the agricultural field. The agricultural field may be identified through its geographical location or geo-referenced location data. A reference coordinate, a size and/or a shape may be used to further specify the agricultural field. The agricultural field may be identified through a reference coordinate and a field boundary.

The term certain field location of the agricultural field is to be understood broadly in the present case and may relate to at least one position or location on the agricultural field. The certain field location may also relate to a section and/or zone of the agricultural field including multiple positions or locations on the agricultural field. The section, e.g. the zone, may relate to multiple positions or locations forming a contiguous area of the agricultural field. The certain field location may relate to distributed patches of the agricultural field multiple positions or locations on the agricultural field indicating a common field condition. The certain field location may be analyzed indicating the field condition of the section. The certain field location may include one or more position(s) or location(s) on the agricultural field flagged with one or more flags indicating the field condition. The agricultural field may comprise a plurality of certain field location, which may have different sizes, field conditions etc. The certain field location may be related to or identified by field data, in particular field conditions. The certain field location may be flagged and/or identified via a location identifier. The certain field location may be identified through its geographical location or geo-referenced location data. A reference coordinate, a size and/or a shape may be used to further specify the section. The certain field location may be of sub-field resolution. The certain field location may include space resolutions in the range of multiple hundred meters to a couple of millimeters, preferred a couple of meters to a couple of centimeters and more preferred multiple centimeters e.g. in the range of 1-300 cm, in the range of 10 to 200 cm, or in the range of 20 to 150 cm. The certain field location refers to a sub-area or a geographical location or location coordinate of a sub-area of the agricultural field.

The phrase treatment device configuration may be understood as an on-board equipment carried that allows for a particular treatment of the field, especially the control of weed. For example, the treatment device configuration may comprise one or more treatment mechanisms, such as a product spray mechanism, a mechanical treatment mechanism, an electrical treatment mechanism, etc., treatment products, especially chemicals, such as herbicides, or the like. The treatment device configurations of the multiple treatment devices may differ from each other even if they have the same treatment mechanism, e.g. chemical/spraying, mechanical, electrical, etc., but in a different configuration, such as loaded with a different treatment product, equipped with a different tool, or the like.

The targeted instructing the at least one treatment device may be understood as taking any action necessary to enable the respective treatment device to reach the certain field location and treat, i.e., control, the weed associated with it. For example, the targeted instructing may comprise identifying a weed-to-treatment device match, i.e. identifying that treatment device has a treatment device configuration suitable for treatment of the identified weed species, generating control data to control operation of the identified treatment device, also with further or intermediate steps.

According to an embodiment, the identified or identifiable weed species may include monocotyledon weed, dicotyledon weed and/or critical weed, associated with and targeted via a respective weed identifier. In this regard, a monocotyledon weed, also referred to as monocot, are grass and grass-like flowering plants, the seeds of which typically contain only one embryonic leaf, or cotyledon. A dicotyledon weed, also referred to as dicot, has two cotyledons or leaves in the seed. While a monocot typically has long narrow leaves, a dicot has broad leaves. A critical weed may be any weed that cannot be treated, at least not efficiently, by using a selective herbicide, but has to be treated by a non-selective, broadband herbicide and/or a mechanical, an electrical, etc. treatment mechanism. A weed identifier may be any computer-readable element used in data processing to uniquely identify a respective weed. For example, the at least one treatment device of the multiple treatment devices may traverse through the field and its one or more monitoring units capture images. The images may then be analyzed by e.g. an image analysis algorithm detecting the weed species. The weed species may be assigned with the respective weed identifier depending on the image analysis. In this way, data, e.g. one or more data sets, are available that electronically identify a detected weed species via the corresponding weed identifier, so that these data can be easily processed further.

In an embodiment, the controller may be configured to targeted instruct the respective treatment device via monocotyledon weed identifier(s), if at least one treatment device is configured to treat monocotyledon weed, dicotyledon weed identifier(s), if at least one treatment device is configured to treat dicotyledon weed, critical weed identifier(s), if at least one weed treatment device is configured to treat critical weed, wherein critical weed identifier(s) for generating the subset are provided based on historical data.

According to an embodiment, a first weed treatment device may comprise a monocotyledon or a dicotyledon herbicide and a second weed treatment device may comprises a critical weed herbicide, a mechanical treatment unit or an electrical treatment unit. In this way, a treatment device can simply wait until some critical weed is found that cannot be treated with selective herbicide but needs broadband herbicide, such as glyphosate or the like, or mechanical or electrical treatment. This reduces need for broadband herbicides and reduces impact on environment.

In an embodiment, the targeted instructing may comprise matching the respective weed identifier with the treatment device configurations of the multiple treatment devices to determine that treatment device having the matching treatment device configuration. For example, a device configuration may be recorded or stored in data, a data set, data base, look-up table, or the like, and a match may be made between the weed identifier and the device configuration or configurations. For example, if a monocot or dicot weed is to be treated or controlled, a match may be present if the respective device configuration indicates, e.g., by a treatment device configuration identifier, that treatment is possible because, e.g., the respective treatment device has an appropriate herbicide or treatment mechanism for the identified weed species. In this way, the treatment device or devices best suited to treat the weed species in question can be determined.

According to an embodiment, the treatment device configurations of the multiple treatment devices may be associated with and targeted via a treatment device configuration identifier indicating treatability of a corresponding weed species. The treatment device configuration identifier can be any kind of electronic element that allows a unique determination of the respective treatment device, such as a device ID, device address, or the like. In this way, data, e.g. one or more data sets, are available that electronically identify a detected weed species via the corresponding treatment device configuration identifier, so that these data can be easily processed further.

In an embodiment, the targeted matching may comprise matching the treatment device configuration identifier with the identified weed species to determine that treatment device having the matching treatment device configuration. For example, a relationship between weed species, e.g. via the corresponding weed identifier, and treatment device configuration can be established in a data set, a database, look-up table or the like, so that the respective treatment device can be specifically addressed or controlled via this relationship.

According to an embodiment, the targeted instructing may comprise generating and providing treatment device operation data configured to guide the targeted treatment device to the certain field location. The operation data may be provided in form of e.g. data packets, messages, or the like, and may comprise instructions on which way the certain field location can be reached, e.g. by comprising navigation data as a guidance. The operation data may also comprise instructions for application of the treatment do be performed, such as information of the treatment mechanism to be used, an application rate for spraying a herbicide, or the like. In this way, the respective treatment device can be sent on mission.

In an embodiment, the targeted instructing may comprise instructing multiple treatment devices respectively, preferably having treatment device configuration different to each other, to treat the certain field location and/or weed present there in sequence. For example, a treatment device configured for critical weed treatment may be operated in sequential mode to one or more other treatment devices equipped with monocot and dicot herbicide. In this way, the one or more treatment devices equipped with monocot and/or dicot herbicide can treat the field with monocot and/or dicot herbicide and monitor field conditions during treatment. Critical weeds may be identified based on such monitoring and the respective field location may be provided to the treatment device configured for critical weed treatment for subsequent critical weed treatment after the one or more treatment devices completed treatment of the field. Alternatively, the treatment device for critical weed treatment may be operated in simultaneous mode with the other treatment devices, i.e. the treatment device configured for monocot or dicot treatment. In this way, the monocot or dicot treatment devices can treat the field with monocot and dicot herbicide and monitor field conditions during treatment. Critical weeds may be identified based on such monitoring and the respective field location may be provided to the treatment device configured for critical weed treatment while the other treatment devices, i.e. the monocot or dicot treatment devices, still treat the field.

According to an embodiment, the treatment devices may instruct each other, i.e. are self-organizing. For example, In the shown arrangement, the treatment devices may communicate with each other. A FANET enables such communication. The mission control of the treatment devices may be self-organized by a negotiation and handover protocol established between the treatment devices. Thereby, e.g. a remote control, which may be utilized by a user, can monitor and/or control the treatment devices.

A second aspect provides a method for weed treatment in an agricultural field. The method is carried out by multiple treatment devices having treatment device configurations different to each other for treating an agricultural field and/or a controller. The method comprises the step of providing a monocotyledon herbicide or a dicotyledon herbicide for a first treatment device of the multiple treatment devices or a critical weed herbicide for a second treatment device of the multiple treatment devices, and operating the first treatment device and/or the second treatment device provided with the respective herbicide according to the method according to the first aspect. For example, a tank of one of the multiple treatment devices may be equipped, e.g. filled, tanked, etc., with monocotyledon herbicide or a dicotyledon herbicide, and, depending on the identified weed species, the respective treatment device may be targeted instructed to treat the identified weed at the certain field location.

With regard to the resulting advantages and possible embodiments, reference is made to the description of the first aspect above.

A third aspect provides a method for weed treatment in an agricultural field. The method comprises providing a monocotyledon, dicotyledon or critical weed herbicide as at least a part of a treatment device configuration for use in the method according to the first aspect. For example, a tank of one of the multiple treatment devices may be equipped, e.g. filled, tanked, etc., with monocotyledon herbicide or a dicotyledon herbicide, and, depending on the identified weed species, the respective treatment device may be targeted instructed to treat the identified weed at the certain field location.

With regard to the resulting advantages and possible embodiments, reference is made to the description of the first aspect above.

A fourth aspect provides a system for treating an agricultural field. The system is particularly configured to carry out the method according to any one of the above first to third aspect. The system comprises a plurality of treatment devices having treatment device configurations different to each other, and a controller. The controller is configured to analyze field data, monitored as at least one of the first and second treatment devices traverses the field, to identify weed present at a certain field location of the field by weed species, and to targeted instruct at least one of the first and second treatment device having a treatment device configuration that matches an identified weed species to treat the field at the corresponding certain field location against the identified weed species.

With regard to the resulting advantages and possible embodiments, reference is made to the description of the first aspect above.

According to an embodiment, a treatment device configuration of a respective treatment device of the plurality of treatment devices is associated with the treatment of monocotyledon weed, dicotyledon weed and/or critical weed, associated with and targeted via a respective weed identifier. In other words, the treatment devices may be equipped, e.g. may carry or may be filled or tanked, with different treatment mechanisms allowing a specific treatment of monocotyledon weed, dicotyledon weed and/or critical weed. For example, a first treatment device may be configured with a monocotyledon herbicide, a second treatment device may be configured with a dicotyledon herbicide, and a third treatment device may be configured with a non-selective, i.e. broadband herbicide, a mechanical treatment mechanism, or an electrical treatment mechanism. In this way, specific weed species can be treated in a targeted manner and/or on demand.

In an embodiment, the treatment device configurations of the multiple treatment devices are associated with and targeted via a treatment device configuration identifier indicating treatability of a corresponding weed species. As described above, this enables to easily address and/or targeted instruct the most suitable treatment device for treatment of the identified weed species.

According to an embodiment, the controller may at least partly arranged in a server or cloud environment and/or a ground station separated to the plurality of treatment devices. In other words, the controller may be distributed among the system, and may comprise a controller unit or module that is arranged centrally. Of course, further controller units or modules may be arranged in the one or more of the multiple treatment devices. That is, the control of weed treatment may be distributed among the system, or may be completely centrally organized. In this way, a treatment device can be equipped with lower computing power, and/or control and/or monitoring can be improved.

In an embodiment, the controller may at least partly arranged on-board with one or more of the plurality of treatment devices. As described above, different architectures are possible for controlling the treatment devices. In this embodiment, self-organized control of the treatment devices may also be possible.

According to an embodiment, the treatment device configurations may differ from each other in comprising a monocotyledon herbicide or a dicotyledon herbicide, or comprising a critical weed herbicide, a mechanical treatment unit or an electrical treatment unit. As described above, a critical weed herbicide may be a non-selective, broadband herbicide, such as Glyphosate or the like.

A fifth aspect relates to the use of a treatment device comprising a monocotyledon herbicide, a dicotyledon herbicide, critical weed herbicide, a mechanical treatment unit or an electrical treatment unit in a method according to the first aspect, the second aspect and/or the third aspect, and/or in a system according to the fourth aspect.

With regard to the resulting advantages and possible embodiments, reference is made to the description of the first aspect above.

A sixth aspect provides a computer program element with instructions, which, when executed on a computing device, is configured to carry out the steps of the method according to the first aspect, and/or to control a system according to the fourth aspect. It is noted that the computer program element may comprise instructions, which when executed by a processor, a computer or the like, and/or by one or more of the above treatment devices, system, and/or controller, cause the treatment device(s) or system to carry out the above embodiments.

It is noted that embodiments of the invention are described with reference to different subject-matters. In particular, some embodiments are described with reference to method-type claims whereas other embodiments are described with reference to the device-type or system-type claims. However, a person skilled in the art will gather from the above and the following description that, unless otherwise notified, in addition to any combination of features belonging to one type of subject-matter also any combination between features relating to different subject-matter is considered to be disclosed with this application. Further, all features can be combined providing synergetic effects that are more than the simple summation of the features.

The system, treatment devices and computer elements disclosed herein may further be configured to execute the methods described above. The system may be configured to provide operation data via a cloud environment or a ground station e.g. in a centralized architecture and/or directly from treatment device to treatment device e.g. in a decentralized architecture. The system and/or treatment devices may be configured to analyse field data and to provide the result of such analysis via the cloud environment or the ground station e.g. in a centralized architecture and/or via any treatment device e.g. in a decentralized architecture. The systems may be configured to select a suitable second treatment device via the cloud environment or the ground station e.g. in a centralized architecture and/or via any treatment device e.g. in a decentralized architecture. The system may be configured to determine and/or provide operation data based on a mission schedule via the cloud environment or the ground station e.g. in a centralized architecture and/or directly via any treatment device e.g. in a decentralized architecture. The system and/or treatment devices may be configured to dynamically adjust upon providing the operation data at least one of the multiple treatment devices used for treating the agricultural field.

### BRIEF DESCRIPTION OF THE DRAWINGS

In the following, the present disclosure is further described with reference to the enclosed figures:
Fig. 1 illustrates an example embodiment of a system with multiple UAVs for treatment of an agricultural field;
Fig. 2 illustrates an example embodiment of a system with multiple UAVs for treatment of an agricultural field;
Fig. 3 illustrates a central architecture with ground station as master;
Fig. 4 illustrates a central architecture with a treatment device as master;
Fig. 5 illustrates a decentral architecture with two self-organized UAVs;
Fig. 6 illustrates the decentral architecture with three self-organized UAVs;
Fig. 7 illustrates the decentral architecture with two UAVs and a field sprayer in self-organized arrangement;
Fig. 8 illustrates the decentral architecture with one UAV, one robot and the field sprayer in self-organized arrangement;
Fig. 9 illustrates the UAV adapted for treating the agricultural field;
Fig. 10 illustrates the ground robot adapted for treating the agricultural field;
Fig. 11 illustrates the field sprayer adapted for treating the agricultural field via spot-spraying;
Fig. 12 illustrates a block diagram of example computing components of a treatment device, such as the UAV, the robot, the field sprayer illustrated in Figs. 8, 9 and 10;
Fig. 13 illustrates a block diagram of an example architecture for a distributed device management system;
Fig. 14 illustrates a block diagram of an example, centralized architecture for the distributed device management system;
Fig. 15 illustrates a block diagram of another example, centralized architecture for the distributed device management system;
Fig. 16 illustrates a block diagram of an example, decentralized architecture for the distributed device management system;
Fig. 17 illustrates a flow chart of an example method for weed treatment distributed over two treatment devices;
Fig. 18 illustrates a flow chart of another example method for weed treatment distributed over multiple treatment devices;
Fig. 19 illustrates a flow chart of yet another example method for weed treatment distributed over multiple treatment devices with a selection scheme;
Figs. 20, 21 illustrate a flow chart of yet another example method for weed treatment distributed over multiple treatment devices with another selection scheme;
Fig. 22 illustrates a flow chart of yet another example method for weed treatment including critical weed treatment:
   Fig. 23 illustrates a data flow diagram for handover in the central architecture;
   Fig. 24 illustrates a data flow diagram for handover in the decentral architecture.

### DETAILED DESCRIPTION OF EMBODIMENT

The disclosure is based on the finding that agricultural fields comprise heterogeneous characteristics (e.g. plant, weed, soil, etc.) distributed over the entire agricultural field. These characteristics are not permanent and therefore not completely known before the treatment devices treat the agricultural field. By monitoring with means of a treatment device during a treatment process of an agricultural field, these specific characteristics of the agricultural field are at least partly revealed. The collected information about these specific characteristics serves to beneficially improve the treatment strategy of one or more further treatment devices. By doing so, it is possible to react on changing conditions in the agricultural field on demand. In other words, the method collects field data via means of at least one of multiple treatment devices passing through the agricultural field and instructs one of the multiple treatment devices to treat a specific weed species identified from the field data. This enables a demand driven treatment of the agricultural field with a plurality of treatment devices and advantageously increases the treatment efficiency.

The following embodiments are mere examples for implementing the methods, the systems or the computer elements disclosed herein and shall not be considered limiting.

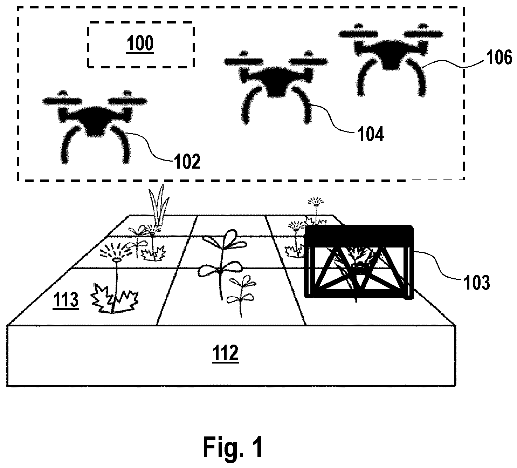

Fig. 1 illustrates an exemplary embodiment of a system with a controller 100 and multiple treatment devices 102, 103, 104, 106 for treatment of the field 112 having multiple sections 113. In this exemplary embodiment, the controller 100 is described in functional terms, as it can be located or distributed in a decentralized or centralized manner, completely or partially in one or more of the treatment devices 102, 103, 104, 106, completely or partially in a server or cloud environment, or a combination thereof, also with several controller units interacting with each other. Further, in this exemplary embodiment, the multiple treatment devices 102, 103, 104, 106 comprise one robot, designated by 103, and three unmanned aerial vehicle (UAV), designated by 102, 104, 106. It is noted that the number of four treatment devices is only exemplary and the system can also comprise only two or three treatment devices, or more than four treatment devices. It is noted that a treatment device may also be provided as a field sprayer as described further below.

The controller 100 is configured to control the respective treatment device 102, 103, 104, 106 autonomously by onboard computers, remotely by a pilot controller as user device or partially remotely e.g. by way of initial operation data. The treatment devices 102, 103, 104, 106 may transmit data signals collected from various onboard sensors and actors mounted to the UAVs 102, 103, 104, 106. Such data may include current operation data such as current altitude, speed, battery level, position, weather or wind speed, field data including treatment operation data such as treatment type, treatment location or treatment mode, monitoring operation data such as field condition data or location data, and/or operation data, such as initial operation data, updated operation data or current operation data. The treatment devices 102, 103, 104, 106 may directly or indirectly provided or send data signals, such as field data or operation data, to the controller 100, which may be onboard, in an cloud environment, a ground station(s), and/or a user device(s), and/or another one of the treatment devices 102, 103, 104, 106. The treatment devices 102, 103, 104, 106 may directly or indirectly receive data signals, such as field data or operation data, from the controller 100, cloud environment, the ground station(s), the user device(s) and/or other treatment devices 102, 103, 104, 106.

The first UAV 102 may have a first treatment device configuration to perform a first treatment operation, the second UAV 104 may have a second treatment device configuration to perform a second treatment operation, and the third UAV 104 may have a third treatment device configuration to perform a third treatment operation. The first, second and third treatment device configuration may differ from each other. Preferably, UAV 102, 104, 106 treatment operation may differ with respect to the treatment type or the treatment mode. The term treatment type relates to the used treatment and/or application mechanism or principle. The term treatment type may also relate to a weed class and corresponding herbicide classes. The treatment type may comprise chemical application, mechanical treatment, electrical treatment, or the like. The treatment mode for chemical application may be a spray mode (e.g. flat, spot, variable rates), for mechanical applications may be a removal mode (e.g. grabber, cutter), for electrical applications may be electrical application mode (e.g. laser, voltage pulse). As an example of a treatment device configuration, the UAVs 102, 104, 106 may carry different treatment unit(s). Additionally, the may carry different monitoring unit(s) to collectively treat the field 112. For example, the UAVs 102, 104, 106 may each carry an imaging unit for monitoring the field 112. UAV 102 may carry a first chemical treatment unit with first spray nozzles for spot spray and a monocot herbicide product. UAV 104 may carry a second chemical treatment unit with second spray nozzles for spot spray and a dicot herbicide product. UAV 106 may carry a critical weed treatment unit with grabbers, electrical pulse arrangement or a non-selective, broadband herbicide, such as glyphosate or the like. The robot 103 may have a fourth configuration, e.g. with two nozzles and a monocot herbicide product. The robot 103 is comparable to the UAVs 102, 104, 106, but is ground based rather than air based. Using the robot 103 in addition to the UAVs 102, 104, 106 has the advantage that the robot 103 has a stable distance to the ground and is easier to handle in monitoring the field 112.

The controller 100 is further configured to analyze the field data as monitored as at least one of the treatment devices 102, 103, 104, 106 traverses the field, to identify weed present at a certain field location, e.g. one of the plurality of field section 113, by weed species. The controller 100 determines which of the treatment devices can treat an identified weed because its treatment device configuration, e.g. it treatment mechanism or the like, is suitable for treating, or more precisely, controlling the weed. Further, the controller 100 is configured to targeted instruct at least one of the treatment devices 102, 103, 104, 106 that has a treatment device configuration that matches the identified weed species, i.e. allows, to treat the field 112 at the corresponding certain field location 113 against the identified weed species.

In other words, the controller 100 has knowledge about the four treatment device configurations and targeted instructs the suitable one(s) of the multiple treatment devices 102, 103, 104, 106 to treat a specific weed species at a certain field location, e.g. a field section 113, based on the weed species identified from the field data.

Based on this basic principle of the system described with reference to Fig. 1, various exemplary embodiments, in particular architectures of the system and/or configurations of the treatment devices, are described below. It should be noted that these embodiments can be combined with each other, provided they are not technically or logically mutually exclusive. It should also be noted that the number and type, e.g. UAV, robot, field sprayer etc., of treatment devices is only exemplary and can be varied within the scope of the disclosure, provided that at least two, i.e. multiple, treatment devices having different treatment device configurations are provided. In particular, if an embodiment illustrates a UAV, robot or field sprayer, the respective treatment device may also be replaced by another type of treatment device.

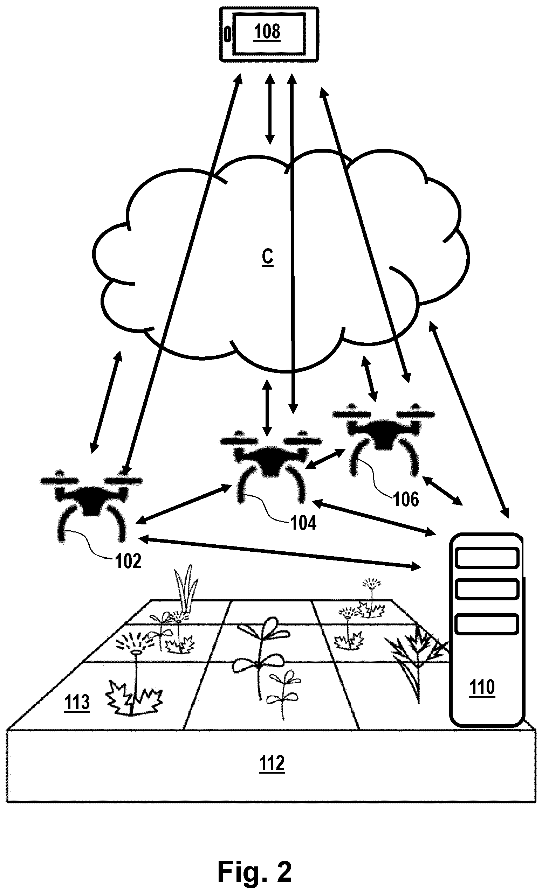

According to Fig. 2, the system may be a distributed system including multiple treatment devices, which are exemplary formed as UAVs 102, 104, 106, one or more ground station(s) 110, one or more user device(s) 108, and a cloud environment C. Following the basic principle as illustrated in Fig. 1, the controller 100 may be realized by a combination of controller units or modules of the treatment devices, e.g., the UAVs 102, 104, 106 (and also robot 103), ground station(s) 110, user device(s) 108, and cloud environment C.

The cloud environment C may facilitate data exchange with and between the UAVs 102, 104, 106, the ground control station(s) 110, and user device(s) 108. The cloud environment C may be a server-based distributed computing environment for storing and computing data on multiple cloud servers accessible over the Internet. The cloud environment C may be a distributed ledger network that facilitates a distributed immutable database for transactions performed by UAVs 102, 104, 106, one or more ground station(s) 110, the user device(s) 108 or one or more user device(s) 108. Ledger network refers to any data communication network comprising at least two network nodes. The network nodes may be configured to a) request the inclusion of data by way of a data block and/or b) verify the requested inclusion of data to the chain and/or c) receiving chain data. In such a distributed architecture, the UAVs 102, 104, 106, one or more ground station(s) 110, one or more user device(s) 108 can act as nodes storing transaction data in data blocks and participating in a consensus protocol to verify transactions. If the at least two network nodes are in a chain the ledger network may be referred to as a block chain network. The ledger network, i.e. the cloud environment C, may be composed of a blockchain or cryptographically linked list of data blocks created by the nodes. Each data block may contain one or more transactions relating to field data or operation data. Blockchain refers to a continuously extendable set of data provided in a plurality of interconnected data blocks, wherein each data block may comprise a plurality of transaction data. The transaction data may be signed by the owner of the transaction and the interconnection may be provided by chaining using cryptographic means. Chaining is any mechanism to interconnect two data blocks with each other. For example, at least two blocks may be directly interconnected with each other in the blockchain. A hash-function encryption mechanism may be used to chain data blocks in a blockchain and/or to attach a new data block in an existing blockchain. A block may be identified by its cryptographic hash referencing the hash of the preceding block.

Communication channels between the nodes, and communication channels between the nodes and the cloud environment C may be established through a wireless communication protocol. A cellular network may be established for UAV 102, 104, 106 to UAV 102, 104, 106, UAV 102, 104, 106 to ground station 110, UAV 102, 104, 106 to cloud environment C or ground station 110 to cloud environment C communication. Such cellular network may be based any known network technology such as SM, GPRS, EDGE, UMTS /HSPA, LTE technologies using standards like 2G, 3G, 4G or 5G. In a local area of a field 112 a wireless local area network (WLAN), e.g. Wireless Fidelity (Wi-Fi), may be established for UAV 102, 104, 106 to UAV 102, 104, 106 or UAV 102, 104, 106 to ground station 110 communication. The cellular network for UAV 102, 104, 106 to UAV 102, 104, 106 or UAV 102, 104, 106 to ground station 110 may be a Flying Ad Hoc Network (FANET). The UAVs 102, 104, 106 and the ground control station(s) 110 may share data signals with the user device(s) 108, such as a remote control for the UAVs 102, 104, 106, via the cloud environment C or directly. The user device(s) 108, such as a remote control for the UAVs 102, 104, 106, may be part of the cellular network, preferably the local network.

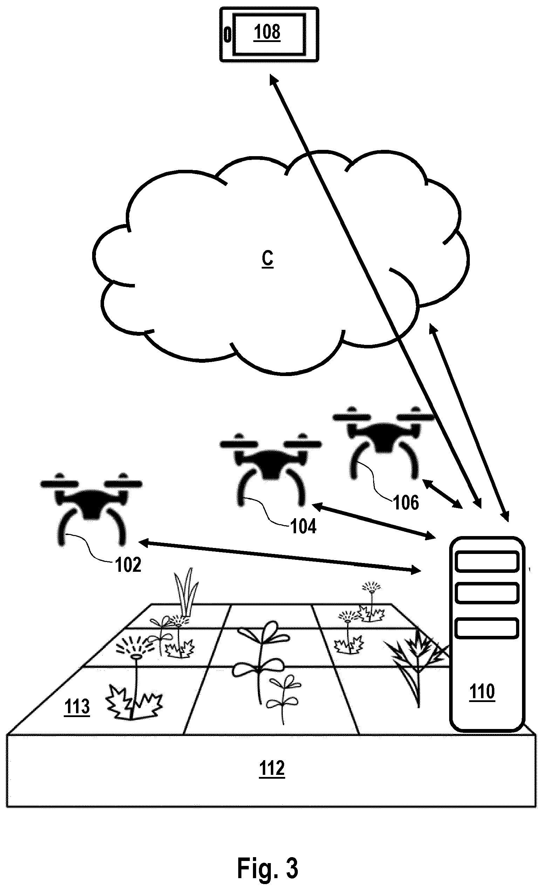

Fig. 3 illustrates a central architecture with the ground station 110 as master.

In the shown arrangement, the UAVs 102, 104, 106 as well as the remote control 108 communicate with and via the ground station 110. A local WLAN network in the area of the field 112 enables such communication. The mission control of the UAVs 102, 104, 106 may be executed by the ground station 110 providing respective operation data to the UAVs 102, 104, 106. Via the remote control 108 a user can monitor or control the UAVs 102, 104, 106. The ground station 110 may stream data to the cloud environment C after or during treatment operation on the field 112.

The UAVs 102, 104, 106 may carry different treatment unit(s) and monitoring unit(s) to collectively treat the field 112. For example: The UAVs 102, 104, 106 may carry a imaging unit for monitoring the field 112. UAV 102 may carry a first chemical treatment unit with first spray nozzles for spot spray and a monocot herbicide product. UAV 104 may carry a second chemical treatment unit with second spray nozzles for spot spray and a dicot herbicide product. UAV 106 may carry a critical weed treatment unit with grabbers, electrical pulse arrangement or a non-selective herbicide like glyphosate.

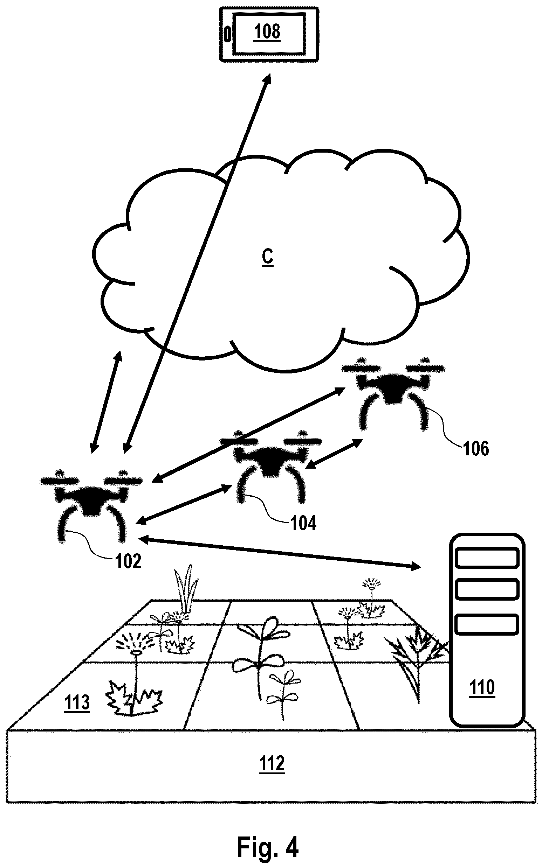

Fig. 4 illustrates a central architecture with the treatment device, e.g. UAV, as master.

In the shown arrangement, the UAVs 104, 106, the remote control 108, the ground station 110 communicate with and via the master UAV 102. A local WLAN network in the area of the field 112 enables such communication. The mission control of the UAVs 102, 104, 106 may be executed by the master UAV 102 providing respective operation data to the UAVs 104, 106. Via the remote control 108 a user can monitor or control the UAVs 102, 104, 106.

The UAVs 102, 104, 106 may carry different treatment unit(s) and monitoring unit(s) to collectively treat the field 112 as for instance exemplified in Fig. 1 and/or Fig. 2.

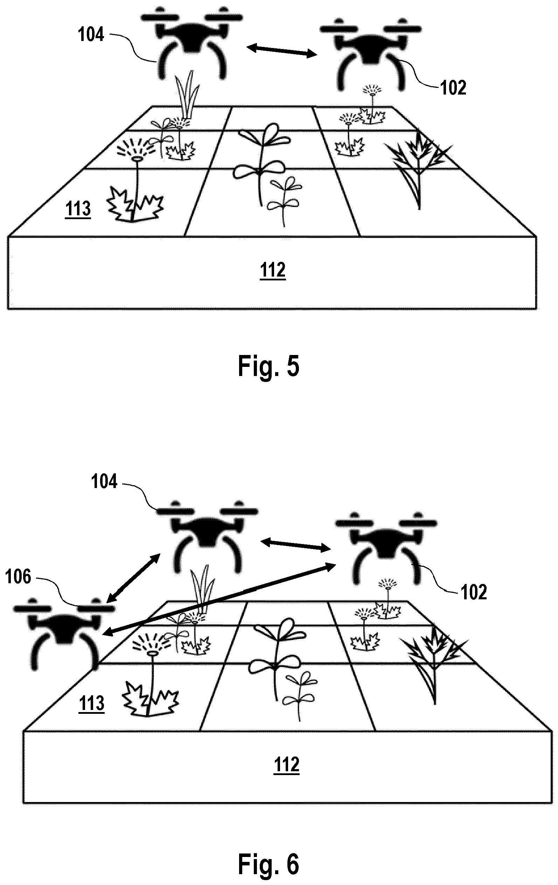

Fig. 5 illustrates a decentral architecture with two self-organized UAVs.

In the shown arrangement, the UAVs 102, 104 communicate with each other. A FANET enables such communication. The mission control of the UAVs 102, 104 may be self-organized by a negotiation and handover protocol established between the UAVs 102, 104. Via the remote control 108 a user can monitor or control the UAVs 102, 104.

The UAVs 102, 104 may carry different treatment unit(s) and monitoring unit(s) to collectively treat the field 112. For example: The UAVs 102, 104 may carry a imaging unit for monitoring the field 112. UAV 102 may carry a first chemical treatment unit with first spray nozzles for spot spray and a monocot herbicide product. UAV 104 may carry a second chemical treatment unit with second spray nozzles for spot spray and a dicot herbicide product.

Fig. 6 illustrates a decentral architecture with three self-organized UAVs.

In contrast to the setup of Fig. 5, the arrangement of Fig. 6 includes the third UAV 106 with a critical weed treatment unit. The UAV 106 for critical weed treatment may be operated in sequential mode to the first and the second UAV 102, 104 with monocot and dicot herbicide. This way the UAVs 102, 104 can treat the field 112 with monocot and dicot herbicide and monitor field conditions during treatment. Critical weeds may be identified based on such monitoring and the respective sections 113 may be provided to UAV 106 for subsequent critical weed treatment after the first and second UAV 102, 104 completed treatment of the field 112. Alternatively, the UAV 106 for critical weed treatment may be operated in simultaneous mode with the first and the second UAV 102, 104. This way the UAVs 102, 104 can treat the field 112 with monocot and dicot herbicide and monitor field conditions during treatment. Critical weeds may be identified based on such monitoring and the respective sections 113 may be provided to UAV 106 for critical weed treatment while the first and second UAV 102, 104 treat the field 112.

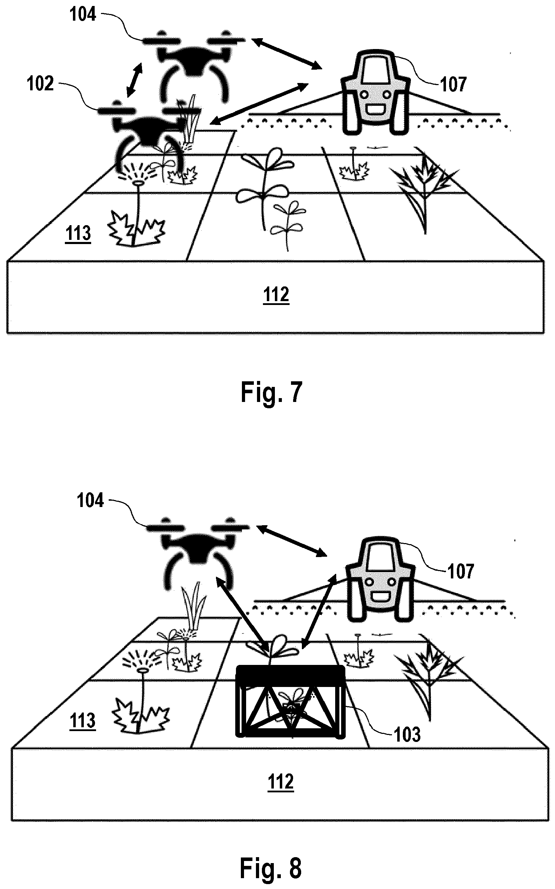

Fig. 7 illustrates the decentral architecture with two UAVs 102, 104 and a field sprayer 107, which field sprayer is a further example of a treatment device, in self-organized arrangement.

In contrast to the setup of Fig. 6, the arrangement of Fig. 7 includes the field sprayer 107 with a boom of nozzles and one or more herbicide product(s). The field sprayer 107 is a tractor-based system with a sprayer. In other embodiments the tractor-based system may be equipped with a harvester or a seeder. The field sprayer 107 has a working width larger than the UAVs 102, 104. The field sprayer 107 may include multiple nozzles, e.g. more than 10, 20, 30, 50 or 100, distributed over the working width, while the UAVs 102, 104 carry a smaller number, e.g. less than 10, 8, 5, 3 or 2, of nozzles. Using the field sprayer 107 enables due to the large working-width a more efficient and fast treatment of large-scale fields. The smaller scale UAVs 102, 104 enable target treatment in certain sections of the field 112, in particular those that cannot be treated by the field sprayer 107. Additionally, if the field sprayer 107 includes a monitoring unit more sections 113 can be monitored in shorter time. The UAVs 102, 104 may in such case not carry a monitoring unit and act based on the field data collected by the field sprayer 106.

Fig. 8 illustrates a decentral architecture with one UAV 104, one robot 103 and the field sprayer 107 in self-organized arrangement.

In contrast to the setup of Fig. 7, the arrangement of Fig. 8 includes the robot 103 with two nozzles and a monocot herbicide product. The robot 103 is comparable to the UAV 104, but ground based rather than air based. Using the robot 103 in addition to the UAV 104 has the advantage that the robot 103 has a stable distance to the ground and is easier to handle in monitoring the field 112.

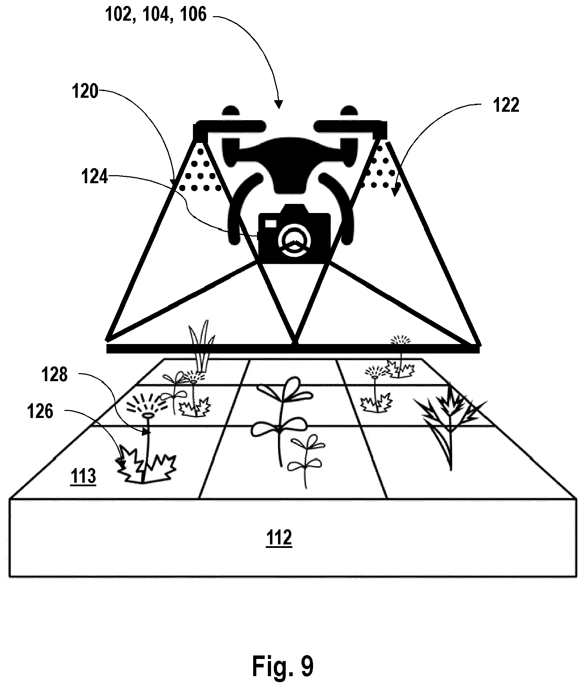

Fig. 9 illustrates the flying UAV 102, 104, 106 adapted for treating the field 112.

The UAV 102, 104, 106 shown in this example includes a camera as monitoring unit 124 for monitoring field condition(s) and two spray nozzles as treatment units 120, 122 for spraying treatment product. The spray nozzles 120, 122 are in fluid connection to at least one tank carried by the UAV 102, 104, 106. Such set up allows for more efficient and targeted field treatment, since depending on the monitored field condition the treatment units 120, 122 may be triggered to treat the field 112. Both operations may be executed while the UAV 102, 104, 106 hovers over the respective field section 113. In other embodiments the UAV 102, 104, 106 may be a scouting UAV 102, 104, 106 including the monitoring unit 124 for monitoring field condition(s). In other embodiments the UAV 102, 104, 106 may be a spray UAV 102, 104, 106 including the treatment unit 120, 122 for spraying treatment product.

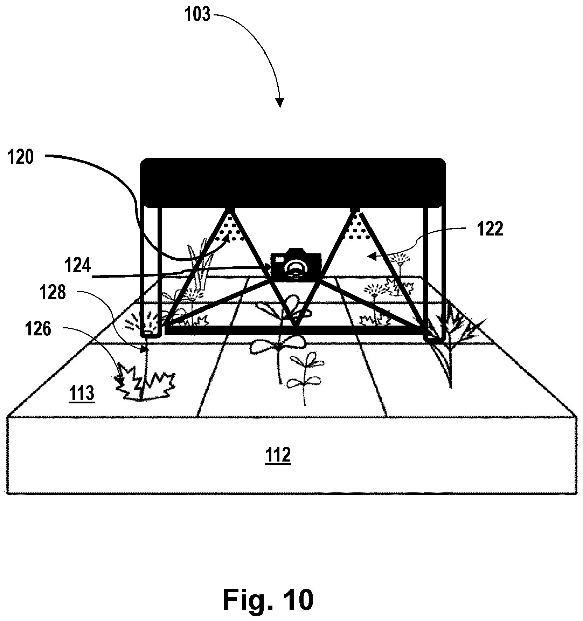

Fig. 10 illustrates a ground robot 103 adapted for treating the field 112.

In contrast to the UAV 102, 104, 106 of Figs. 1, 2 and/or 3, the treatment device 103 of Fig. 10 is ground based and traverses on the ground. As shown in this example the robot 103 includes a monitoring unit 124 for monitoring field condition(s) and spray nozzles 122, 124 as treatment unit for spraying treatment product. The spray nozzles 120, 122 are in fluid connection to at least one tank carried by the robot 103. Similar to the flying UAV 102, 104, 106 such ground-based set up allows for more efficient and targeted field treatment, since depending on the monitored field condition the nozzles 122, 124 may be triggered to treat the field 112. In other embodiments the robot 103 may be a scouting robot 103 including the monitoring unit 124 for monitoring field condition(s). In other embodiments the robot 103 may be a spray robot 103 including the treatment unit 122, 120 for spraying treatment product.

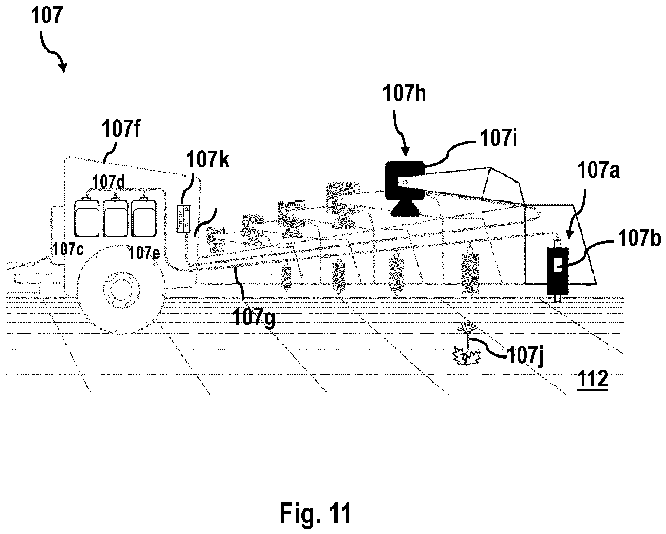

Fig. 11 illustrates the field sprayer 107 adapted for treating the field 112 via spot-spraying.

Fig. 11 shows an example of a large-scale treatment device being the field sprayer 107, that includes spray nozzles 107a as treatment components. It is noted that Fig. 11 is merely schematic illustrating main components, wherein the field sprayer 107 may comprise more or less components than shown.

The field sprayer 107 is part of the system shown in Fig. 1 and/or Fig. 2 for applying the treatment product on the field 112 or on one or more subareas thereof. The field spray 107 may be releasably attached or directly mounted to a tractor. In at least some embodiments, the field sprayer 107 comprises a boom with multiple spray nozzles 107a arranged along the boom. The spray nozzles 107a may be fixed or may be attached movably along the boom in regular or irregular intervals. Each spray nozzle 107a may be arranged together with one or more, preferably separately, controllable valves 107b to regulate fluid release from the spray nozzles 107a to the field 112.

One or more tank(s) 107c,d,e are placed in a housing 107f and are in fluid communication with the nozzles 107a through one or more fluidic lines 107g, which distribute the one or more treatment product(s) or composition ingredients like water to the spray nozzles 107a. This may include chemically active or inactive ingredients like a treatment product or mixture, individual ingredients of the treatment product or mixture, a selective or non-selective treatment product, a fungicide, a fungicide or mixture, ingredients of a fungicide mixture, ingredients of a plant growth regulator or mixture, a plant growth regulator, water, oil, or any other treatment product. Each tank 107c,d,e may further comprise a controllable valve to regulate fluid release from the tank 107c,d,e to fluid lines 107g.

For monitoring and/or detecting, the field sprayer comprises a detection system 107h with multiple monitoring components 107i arranged along e.g. the boom. The monitoring components 107i may be arranged fixed or movable along the boom in regular or irregular intervals. The monitoring components 107i are configured to sense one or more conditions of the field 107j. The monitoring components 107i may be optical components providing images of the field 112. Suitable optical monitoring components 107i are multispectral cameras, stereo cameras, IR cameras, CCD cameras, hyperspectral cameras, ultrasonic or LIDAR (light detection and ranging system) cameras. Alternatively or additionally, the monitoring components 107i may comprise further sensors to measure humidity, light, temperature, wind or any other suitable condition on the field 112.

In at least some embodiments, the monitoring components 107i may be arranged as shown in Fig. 7 with components 107i perpendicular to the movement direction of the treatment device 107 and in front of the nozzles 107a (seen from drive direction). In the embodiment shown in Fig. 10, the monitoring components 107i are optical monitoring components 107h and each monitoring components 107i is associated with a single nozzle 107a such that the field of view comprises or at least overlaps with the spray profile of the respective nozzle 107a once the nozzle reach the respective position. In other arrangements each monitoring component 107i may be associated with more than one nozzle 107a or more than one monitoring component 107i may be associated with each nozzle 107a.

The monitoring components 107i, the tank valves and/or the nozzle valves 107b are communicatively coupled to a control system 107k. In the embodiment shown in Fig. 10, the control system 107k is located in a main housing 107f and wired to the respective components. In another embodiment monitoring components 107i, the tank valves or the nozzle valves 107b may be wirelessly connected to the control system 107k. In yet another embodiment more than one control system 107k may be distributed in the treatment product application device housing 107f and communicatively coupled to monitoring components 107h, the tank valves or the nozzle valves 107b.

The control system 107k may be configured to control and/or monitor the monitoring components 107i, the tank valves or the nozzle valves 107b based on a control file or operation parameter set provided by a control file and/or following a control protocol. In this respect, the control system 107k may comprise multiple electronic modules. One module for instance may be configured to control the monitoring components 107i to collect data such as images of the field 112. A further module may be configured to analyze the collected data such as the images to derive parameters for the tank or nozzle valve control 107b. A further module may be configured to receive the control file and the analyzed data to derive a control signal. Yet further module(s) may be configured to control the tank valves and/or nozzle valves 107b based on such derived control signal.

As described above, the field sprayer 107 comprises or is communicatively coupled to the monitoring components 107i, such as image capturing devices 107i, and is configured to provide one or more images of the area of interest to the control system 107k, e.g. as image data which can be processed by a data processing unit. It is noted that both capturing the at least one image by the monitoring components 107i and processing the same by the control system 107k is performed onboard or through communication means during operation of the field sprayer, i.e. in real-time. It may further be noted that any other dataset than image data providing field conditions may be used.

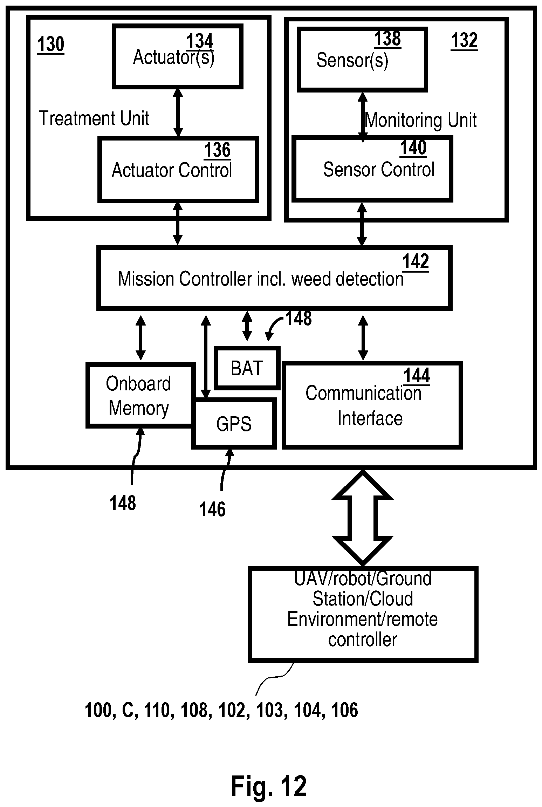

Fig. 12 illustrates a block diagram of example internal components of the treatment device 102, 104, 106, such as the UAV, the robot 103 or the field sprayer 107 illustrated in Figs. 9, 10 or 11.

The treatment device 102, 103, 104, 106, 107 includes a treatment unit 130 including actuator(s) 134 and an actuator control 136. The actuator(s) may include engine actuators, steering actuators which may be used to maneuver the treatment device 102, 103, 104, 106, 107. The actuator(s) may include treatment actuators configured to treat the field 112 and to provide field data e.g. via the actuator control 136. The actuator control 136 may include subunits such as an obtaining unit, a providing unit or a control unit. The treatment device 102, 103, 104, 106, 107 further includes a monitoring unit 132 with sensor(s) 138 and an sensor control 140. The sensor(s) 138 may include an accelerometer, a gyroscope, and a magnetometer which may be used to estimate acceleration and speed of the treatment device 102, 103, 104, 106, 107. The sensor(s) 138 may include field monitoring sensor(s) configured to sense field conditions and to provide field data. The sensor control 140 may include subunits such as obtaining unit, providing unit or control unit.

The treatment device 102, 103, 104, 106, 107 includes a mission controller 142 configured to control or monitor the mission of the treatment device 102, 103, 104, 106, 107 on the field 112. The mission controller 142 may further include subunits such as obtaining unit, providing unit or controlling unit. The treatment device 102, 103, 104, 106, 107 also includes an onboard memory 148 for storing e.g. the mission schedule, the field data, the operation data or the like. The treatment device 102, 103, 104, 106, 107 further includes a positioning system 146 configured to provide the current position of the treatment device 102, 103, 104, 106, 107 such as a global positioning system (GPS) or a camera based positioning system e.g. based on optical flow. The treatment device 102, 103, 104, 106, 107 further includes a power supply or fuel tank 148 including e.g. fuel or a rechargeable battery and a battery controller. The battery controller may be configured to provide a remaining battery level e.g. prior to or during mission.

The treatment device 102, 103, 104, 106, 107 may be provided with various levels of control ranging from fully autonomously via remotely by a pilot controller to partially remotely/autonomously e.g. by way of an initial mission schedule. For communication with other devices such as the ground station 110 or other treatment devices 102, 103, 104, 106, 107 or the cloud environment C the treatment device 102, 103, 104, 106, 107 includes a wireless communication interface 144. The wireless communication interface 144 may be configured with one or more cellular communication circuitry or circuitries, such as 4G or 5G circuitry, or one or more short range communication circuitry(s), such as Bluetooth or ZigBee interfaces. The wireless communication interface 144 enables communication with other nodes of the distributed system, such as other UAVs 102, 103, 104, 106, 107, the ground station 110, the cloud environment C or a remote controller 108. Cloud environment C access may be provided via the communication interface 144 of the treatment device 102, 103, 104, 106, 107 or via a client device 108 such as the remote controller 108 of the treatment device 102, 103, 104, 106, 107 or via the ground station 110.

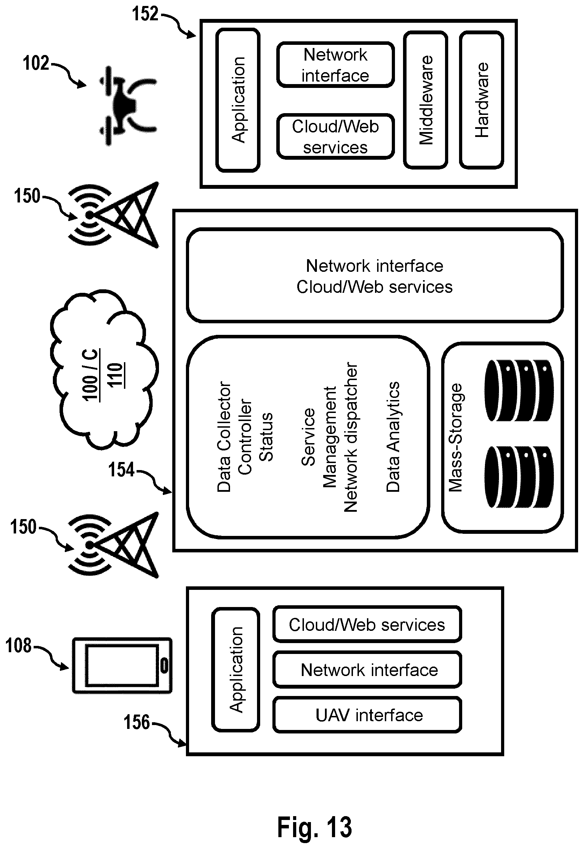

Fig. 13 illustrates a block diagram of an example architecture for a distributed device management system. The system architecture as an example refers to the treatment device 102, the cellular network 150, the remote controller 108 and the cloud environment C or ground station 110.

The treatment device 102 management system includes a treatment device layer 152 as part of the treatment device 102 as well as a cloud service layer 154 associated with the remote computing nodes and a remote control or client layer 156 associated with the client devices 108.

The treatment device layer 152 may be split into several hierarchical layers: the hardware, the middleware and the interface layer. The hardware layer relates to hardware resources such as sensors and actuators. The middleware relates to any of the known middleware for robotic operations. One example is the Robot Operating System (ROS) which provides different abstractions to hardware, network and operating system such as navigation, motion planning, low-level device control, and message passing. The communication layer relates to communication protocols. One communication protocol used in UAVs is for example MAVLink, which is built over different transport protocols (i.e. UDP, TCP, Telemetry, USB) that allow the exchange of messages between the UAVs and other devices. Such software architecture allows to control and monitor treatment devices 102 without having to interact with the hardware. An additional application layer allows to customize the functionalities provided by e.g. ROS to a) track the field operation of the treatment device 102, b) collect, obtain and/or analyze field data with respect to field conditions c) provide analyzed or flagged sections in the field data, d) update the operation data or the weed treatment data for the treatment device 102, e) receive the operation data or the weed treatment data for the treatment device 102 or f) stream field data to the ground station 110, the cloud environment C or the client device 108.

The cloud service layer 154 may include: a mass storage layer, the computing layer, the interface layer. The storage layer is configured to provide mass storage for streams of data provided by the treatment device 102. Each treatment device 102 may be configured to stream e.g. operation data, field data, weed treatment data, control data and the like in real-time during field operation, intermittently in batches, or after field operation. Such data may be stored in structured databases such as SQL databases or in a distributed file system such as HDFS, NoSQL database such as HBase. The computing layer may include an application layer that allows to customize the functionalities provided by standard cloud services to perform computing processes based on e.g. the field data, the operation data, the mission schedule. Such functionalities may include a) streaming field data provided by the treatment device 102, b) obtaining or analyzing field data provided by the treatment device 102, c) determining or generating operation data or weed treatment data for the treatment device 102, d) updating operation data or weed treatment data for the treatment device 102, e) providing initial operation data for the treatment device 102, f) determining operation data based on the mission schedule for the treatment device, g) determining field conditions or weed detection or h) dynamically adjusting the number of treatment devices 102 active on the field 112. Such applications may require real-time application processing when new events are detected and require the dynamic re-scheduling of the operation of treatment devices 102 on the field 112 to ensure the optimality of the missions' executions after considering the new events. The interface layer may implement web services, network interfaces also as UDP or TCP or Websocket interfaces. Such interfaces may enable listening to JSON serialized messages sent from treatment devices 102 and to handle streaming applications. In the context of UAV management, MAVLink messages may be received from the UAVs 102 through network interfaces (UDP or TCP), and then forwarded to the client devices 108 through Websockets for monitoring or remote control. While network interfaces (UDP or TCP) may be used to handle continuous streams, web services may be used for sending control commands to the treatment device 102 and getting information from the cloud environment C or the ground station 110.

The client layer 156 provides interfaces for both end-users and treatment device 102. For end-users, the client layer 156 may run client side Web applications, which provide interfaces to the cloud services layer 154 or the treatment device layer 152. Users may be provided access for registering multiple treatment devices 102, 103, 104, 106, 107 defining and modifying operation parameters and decision making based on data analysis provided by the cloud environment C. The applications may be configured for users to monitor and control the treatment devices 102, 104, 106 and their operation remotely. The applications may provide the functionalities to connect/disconnect, use available physical treatment devices and their services, configure and control the operation on the field 112 and monitor the operation on the field 112.

It should be noted at this point, that the description applies to any distribution of processing steps carried out by different nodes in the distributed system shown in Figs. 1 to 11. For instance the treatment device 102, 103, 104, 106, 107 may be configured to collect and provide field data, weed treatment data or operation data to the cloud environment C. Such data may be analyzed e.g. for field conditions, weed or used to determine e.g. the mission schedule or operation data on the cloud environment C. The cloud environment C may provide the result of such analysis or determination to the treatment device 102, 103, 104, 106, 107 or to the client device 108. Alternatively, the treatment device 102, 103, 104, 106, 107 may be configured to collect and analyses field data and/or to determine field data, such as field conditions or weed, or operation data. The result may be passes to the cloud environment C, which may further process the result e.g. to update a mission schedule and/or provide the result to other treatment devices 102, 103, 104, 106, 107 or to the client device 108. Further alternatively, the treatment device 102, 103, 104, 106, 107 may be configured to collect and analyses field data and/or to determine field data, weed treatment data or operation data. The result of such analysis or determination may be provided to other treatment devices 102, 103, 104, 106, 107 or the client device 108. The field data, the operation data and/or the result of any analysis may be streamed to the cloud environment C for storage purposes. The alternatives described here are only for illustration purposes and should not be considered limiting.

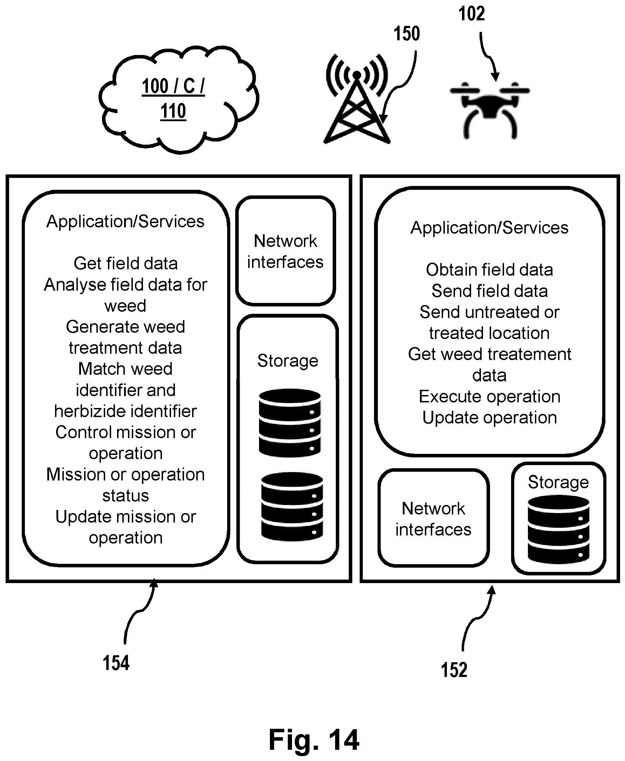

Fig. 14 illustrates a block diagram of an example, centralized architecture for the distributed device management system.

In the centralized embodiment e.g. the treatment device 102 collects field data, sends field data, sends untreated or treated sections, receives weed treatment data from the ground station 110 or the cloud environment C, executes operation or updates operation. The ground station 110 or the cloud environment C stream field data from the treatment device 102, analyses field data, generate weed treatment data, match weed identifier and herbicide identifier, manage missions for the treatment devices 102, 103, 104, 106, 107, generate operation data based on the mission schedule or update operation data based on the field data and the mission schedule.

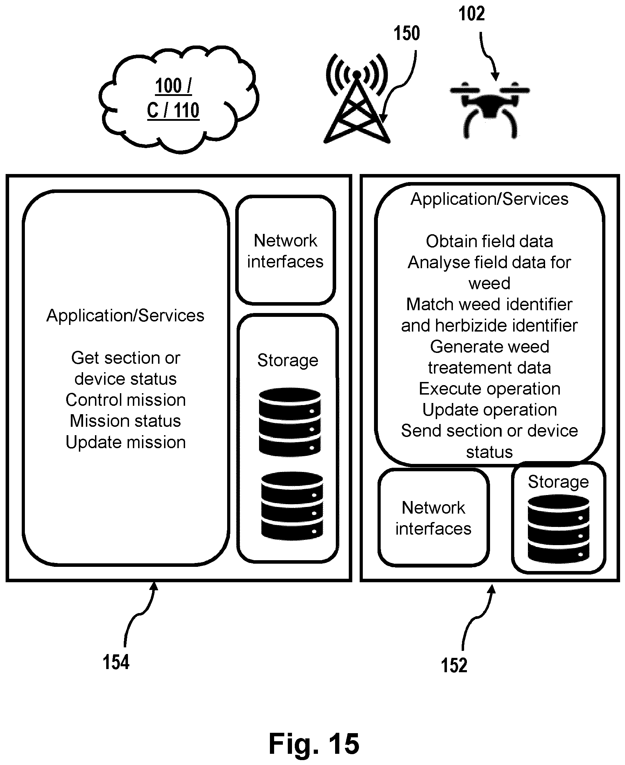

Fig. 15 illustrates a block diagram of another example, centralized architecture for the distributed device management system.

In the de-centralized embodiment with central mission management, the treatment devices 102, 103, 104, 106, 107 102 collect field data, analyze such field data, generate weed treatment data, match weed identifier and herbicide identifier, send field data, send untreated or treated sections, receive weed treatment data from the ground station 110 or the cloud environment C, execute operation or update operation. The ground station 110 or the cloud environment C get section or device status or manage missions for the treatment devices 102, 103, 104, 106, 107.

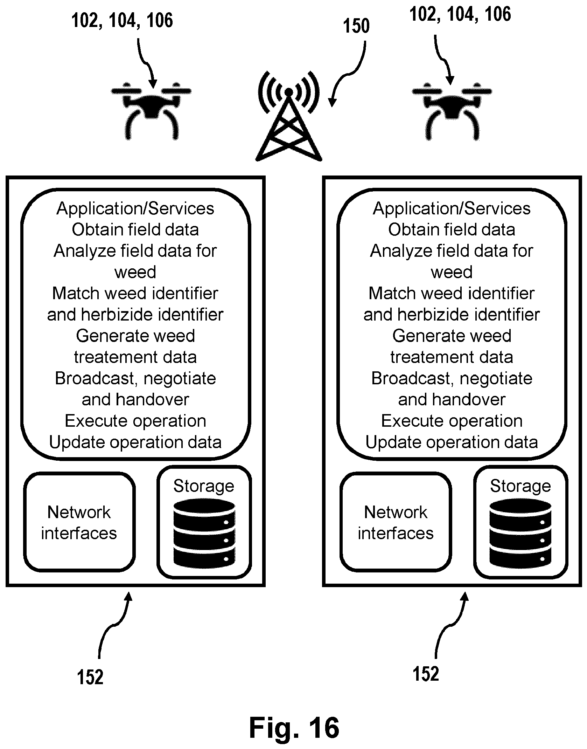

Fig. 16 illustrates a block diagram of an example, decentralized architecture for the distributed device management system.

In the de-centralized embodiment with self-organized mission management, the treatment devices 102, 103, 104, 106, 107 102 collect field data, analyze such field data, generate weed treatment data, match weed identifier and herbicide identifier, send field data, broadcast, negotiate and handover, execute operation or update operation. The ground station 110 or the cloud environment C may stream data from the treatment devices 102, 103, 104, 106, 107 for storage purposes during or after treatment of the field 112.

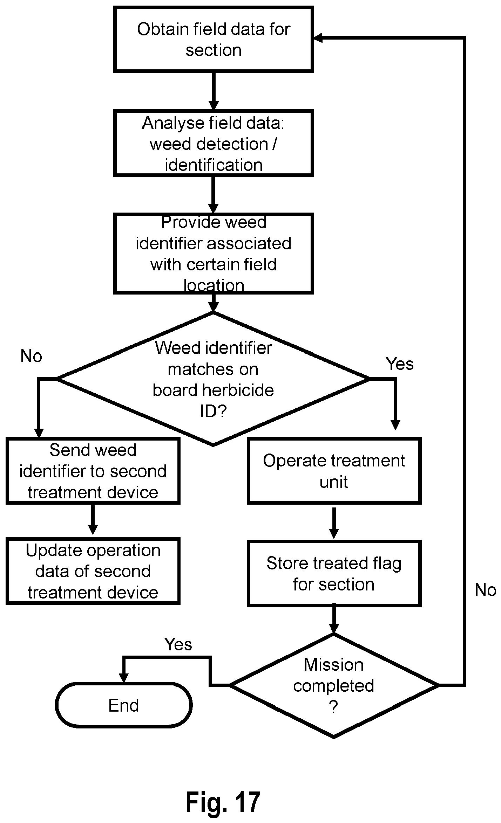

Fig. 17 illustrates a flow chart of an example method for weed treatment distributed over two - a first and a second - treatment devices 102, 103, 104, 106, 107.

In a first step field data for the certain field location, e.g. a field section 113, is obtained by the first treatment device 102, 103, 104, 106, 107. The field data may be obtained by the monitoring unit 132 of the first treatment device 102, 103, 104, 106, 107. The monitoring unit 132 may be an optical sensor (e.g. a camera, a NIR sensor, RGB camera, LIDAR, LADAR, RGB, Laser). The monitoring unit 132 may collect images of the field section 113. The certain field location, e.g. the field section 113, may be a position, location or zone of the field 112 including multiple positions or locations on the field 112. The section may be of sub-field resolution. The section may include space resolutions in the range of multiple hundred meters to a couple of millimeters, preferred a couple of meters to a couple of centimeters and more preferred multiple centimeters e.g. in the range of 1-300 cm, in the range of 10 to 200 cm, or in the range of 20 to 150 cm. The section refers to a sub-area or a geographical location or location coordinate of a sub-area of the agricultural field.

In a second step the field data is analyzed to identify weeds in the field data. The analysis of the field data may include the use of a data driven model for determining weed indentifier(s). The data-driven model may determine the weed indentifier(s) based on segmentation or attention mechanisms. The weed indentifier(s) may be determined by providing the field data to a data driven model segmenting one or more weeds and providing the weed indentifier(s) based on such segmentation. The weed indentifier(s) may be determined by providing the field to a data driven model generating metadata e.g. comprising a region indicator signifying field data location of the weed in the obtained field data and providing the weed indentifier(s) associated with the field data. The data driven model may be configured to have been trained with a training dataset comprising multiple sets of examples, each set of examples comprising example field data, of one or more weed(s) in an example area and associated example metadata comprising a region indicator signifying an location of the weed in the example field data and an example plant indicator associated with the field data.

One example of such a method is described in WO2017194399A1. The method disclosed and herewith incorporated by reference identifies a type of weed by contouring areas of leaves and determining whether the weed is a monocotyledon or a dicotyledon. Furthermore, the method comprises determining a growth stage and determining the type of weed identified by a weed name and a probability of the correctness of the determination using at least one out of a plurality of the received metadata and a plurality of metadata determined during the contouring, during the determining whether the weed is a monocotyledon or a dicotyledon, and during the determination of the growth stage of the weeds as input parameters to a set of classifiers using a storage comprising names of types of weeds together with a plurality of sets of metadata per weed type.

Another example of such a method is disclosed in WO2021001318A1. The method or decision-support disclosed and herewith incorporated by reference comprises receiving an image of one or more agricultural objects in a field and applying a data driven model to the received image to generate metadata comprising at least one region indicator signifying an image location of the one or more agricultural objects in the received image and an agricultural object label associated with the at least one region indicator. The data driven model is configured to have been trained with a training dataset comprising multiple sets of examples, each set of examples comprising an example image of one or more agricultural objects in an example field and associated example metadata comprising at least one region indicator signifying an image location of the one or more agricultural objects in the example image and an example agricultural object label associated with the at least one region indicator. The method or decision support device further comprises an output unit, configured for outputting the metadata associated with the received image.

In a third step weed identifier(s) associated with the certain field location, e.g. a field section 113, are provided from the analysis. Such weed identifiers may be associated with monocotyledon or dicotyledon weeds. Monocotyledon weeds detectable via the analysis in the second step may be: LIST. Dicotyledon weeds detectable via the analysis in the second step may be: LIST

In a fourth step weed identifier(s) are matched with on board herbicide identifiers, also referred to as treatment device configuration identifiers. Herbicide identifiers may relate to the first herbicide product of the first treatment device 102, 103, 104, 106, 107 and weeds that may be treated with such product. Additional information related to the herbicide identifier may include the dose rate for respective weeds potentially in combination with the nozzle type of the treatment unit 130 of the first treatment device 102, 103, 104, 106, 107. An example of herbicide identifiers is shown below:

| **Weed** | **Active Ingredient** | **Product** |
|---|---|---|
| Ipomoea coccinea | GLUFOSINATE | BASTA SL 500.0 mL/10a (300.0-500.0 mL/10a) |
| Digitaria ciliaris, Persicaria longiseta, Persicaria lapathifolia, Stellaria media, Chenopodium album, Persicaria nepalensis | GLUFOSINATE | BASTA SL 500.0 mL/10a (300.0-500.0 mL/10a) |
| Digitaria ciliaris | QUIZALOFOP-E | Polt SC 300.0 mL/10a (200.0-300.0 mL/10a) |

The first herbicide product may specifically treat monocotyledon or dicotyledon weeds. If the first herbicide product treats monocotyledon weeds, a second treatment device 102, 103, 104, 106, 107 may include a second herbicide product treating dicotyledon weeds. If the first herbicide product treats dicotyledon weeds, a second treatment device 102, 103, 104, 106, 107 may include a second herbicide product treating monocotyledon weeds.

If the weed identifier matches one herbicide identifier the treatment unit 130 of the first treatment device 102, 103, 104, 106, 107 is operated in a fifth step. The treatment unit 130 may comprise at least one spray nozzle 120, 122, 107a, which may be activated. The first treatment device 102, 103, 104, 106, 107 may further comprise one or more tanks 107c,d,e with the first herbicide product. The tank 107c,d,e may be in fluid connection to the nozzle 120, 122, 107a. The activation of the spray nozzle 107c,d,e results in the first herbicide product being released to the section 113. The obtaining step, analysis step up until the operation step may be carried out while the first treatment device 102, 103, 104, 106, 107 is traversing the respective section 113. In case of the UAV 102, 104, 106 the steps are performed while the UAV 102, 104, 106 hovers over the section. In case of the robot 103 or field sprayer 107 the steps may be performed while the field sprayer 107 traverses over the section. In such case the respective monitoring unit 132 and the treatment unit 130 may be arranged at a distance on the robot 103 or the field sprayer 107 and the robot 103 or field sprayer 107 may travel at a velocity such that the time range between computing the obtaining step to computing the operation step correspond to the travelled distance.

In a sixth step the treated flag for the section 113 is stored and potentially communicated to a central storage such as the cloud environment C.

In a seventh step it is checked based on the sections 113 treated, untreated or flagged to be treated by the first treatment device 102, 103, 104, 106, 107 and the second treatment device 102, 103, 104, 106, 107, if the area of the field 112 or all sections 113 of the field 112 are treated. If that is the case the treatment mission for the field 112 is completed.

If the weed identifier does not match one herbicide identifier the treatment unit 130 of the first treatment device the weed identifier is provided in an eighth step to the second treatment device 102, 103, 104, 106, 107. Similar to the first treatment device 102, 103, 104, 106, 107 the operation step will be performed on the second treatment device 102, 103, 104, 106, 107, 108. In addition, a match validation step may be performed on the second treatment device 102, 103, 104, 106, 107, 108.

Optionally the handover is confirmed for the first treatment device 102, 103, 104, 106, 107, 108. The weed treatment data and/or operation data of second treatment device 102, 103, 104, 106, 107 may be updated for second treatment device 102, 103, 104, 106, 107 on the second treatment device 102, 103, 104, 106, 107, the cloud environment C or the ground station 110. The updated weed treatment data and/or operation data is provided to the second treatment device 102, 103, 104, 106, 107. This may be done centrally or decentrally e.g. for all treatment devices 102, 103, 104, 106, 107.

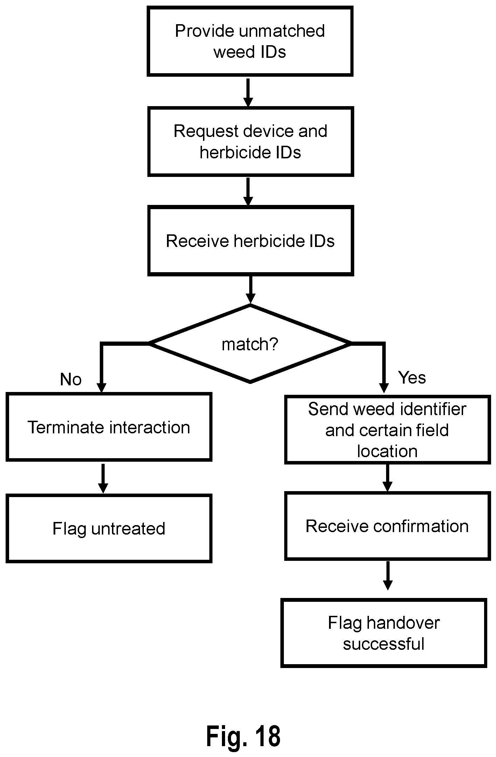

Fig. 18 illustrates a flow chart of another example method for weed treatment distributed over multiple treatment devices.

In a ninth step the weed identifier resulting from the analysis step two as lined out in the context of Fig. 16 is provided. Such providing takes place if it does not match the onboard herbicide identifier(s) of the first treatment device 102, 103, 104, 106, 107, which detected such weed identifier for the certain field location, e.g. the field section 113. Hence the weed identifier is an unmatched weed identifier.

In such case the first treatment device 102, 103, 104, 106, 107 broadcasts a request to other treatment devices 102, 103, 104, 106, 107 on the field 113 in step ten. Such request may be broadcasted to a sub set of other treatment devices 102, 103, 104, 106, 107 on the field 113, e.g. such treatment device 102, 103, 104, 106, 107 in a certain distance or communication range to the first treatment device 102, 103, 104, 106, 107.

Based on such request in an eleventh step herbicide identifiers other treatment devices 102, 103, 104, 106, 107 on the field 113 are received. In a twelfth step weed identifier(s) are matched with on board herbicide identifiers as line out in the context of step four of Fig. 16.

In other embodiments the unmatched weed identifier may be provided to the ground station 110 or the cloud environment C and such entity may accommodate for matching with already existent herbicide and device identifiers. The previous steps ten and eleven may not apply in such cases.

If the weed identifier matches one herbicide identifier of the treatment devices 102, 103, 104, 106, 107, such treatment devices 102, 103, 104, 106, 107 may be selected and the weed identifier and the section are provided to such treatment devices 102, 103, 104, 106, 107 in a step thirteen. Similar to the process lined out in the context of step 5 of Fig. 16, the treatment unit 130 of the selected treatment device 102, 103, 104, 106, 107 is operated.

In a further step seventeen, a confirmation of the handover may be received by the first treatment device 102, 104, 106, 107, the ground station 110 or the cloud environment C as the case may be. In a further step eighteen, a flag handover successful may be set.

If not match is found, the interaction will be terminate and an untreated flag may be set for the section 113.

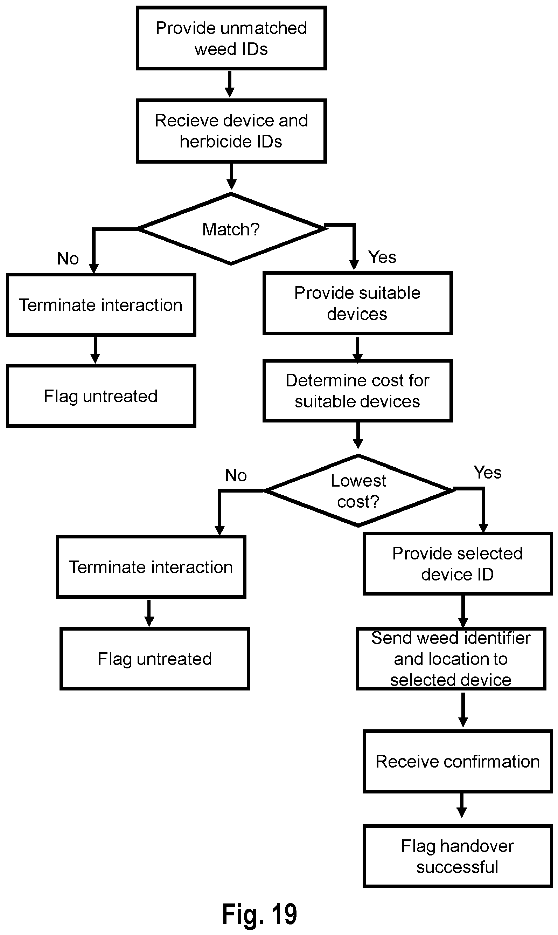

Fig. 19 illustrates a flow chart of yet another example method for weed treatment distributed over multiple treatment devices with a selection scheme.

In addition to the method lined out in the context of Fig. 17, Fig. 18 includes a more sophisticated selection scheme. Here rather than choosing the first match the method of Fig. 18 provides based on the received device and herbicide identifiers suitable devices for the provided unmatched weed identifier(s), i.e. those not matched with on board herbicide identifier(s). Based on such suitable devices a cost function for the suitable devices is determined. The treatment device 102, 104, 106, 107 with the lowest cost may be selected. The interaction with other treatment devices 102, 104, 106, 107 may be terminated. The device identifier of the selected treatment device 102, 104, 106, 107 may be provided and the weed identifier(s) together with the certain field location, e.g. the section 113, provided to the selected treatment device 102, 104, 106, 107. Based on the confirmation of successful handover the flag handover successful may be set.

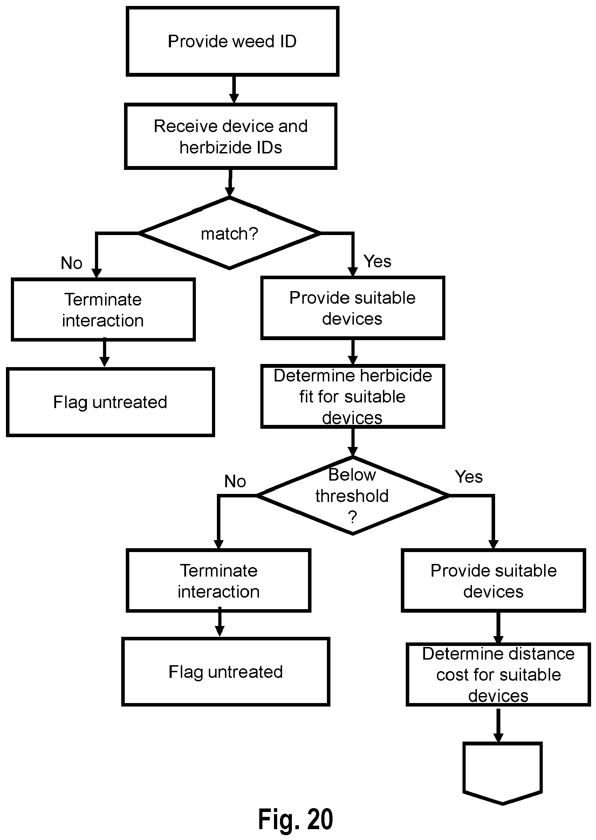

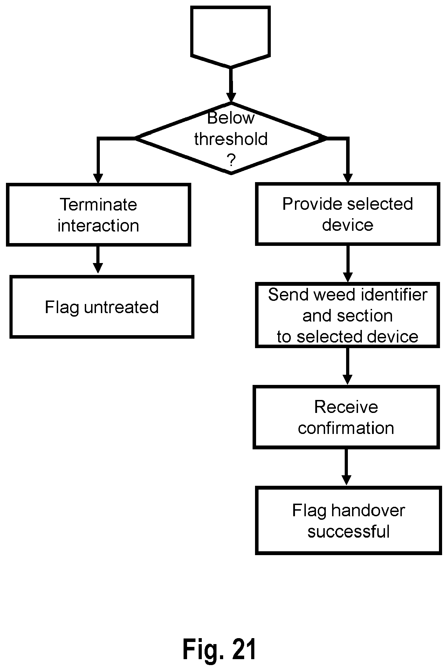

Figs. 20, 21 together illustrate a flow chart of yet another example method for weed treatment distributed over multiple treatment devices with another selection scheme.

In addition to the method lined out in the context of Figs. 18 and 19, Fig. 20 includes another more sophisticated selection scheme. Here rather than choosing the first match, the method of Fig. 20 provides based on the received device and herbicide identifiers suitable devices for the provided unmatched weed identifier(s), i.e. those not matched with on board herbicide identifier(s).

In difference to the method lined out in the context of Fig. 19, a threshold logic is applied. Here the device selection step e.g. includes determining a herbicide fit for suitable devices. Is the herbicide fit below a threshold another subset of suitable treatment devices 102, 104, 106, 107 is provided. Based on the so determined other subset of suitable treatment devices 102, 104, 106, 107 a second selection step may include determining a distance cost for the other subset of suitable treatment devices 102, 104, 106, 107. The suitable treatment device 102, 104, 106, 107 with the lowest distance cost or below a threshold for distance cost may be selected from such subset.

The interaction with other treatment devices 102, 104, 106, 107 may be terminated. The device identifier of the selected treatment device 102, 104, 106, 107 may be provided and the weed identifier(s) together with the certain field location, e.g. the field section 113, provided to the selected treatment device 102, 104, 106, 107. Based on the confirmation of successful handover the flag handover successful may be set.

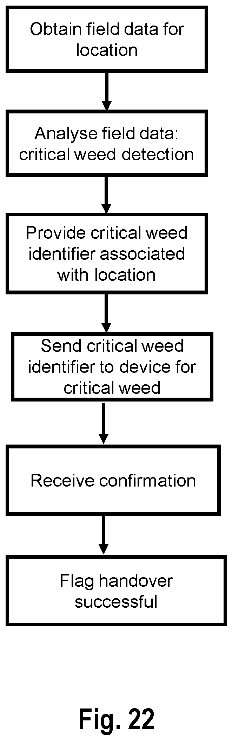

Fig. 22 illustrates a flow chart of yet another example method for weed treatment including critical weed treatment.

In a first step of this example field data for the certain field location, e.g. the field section 113, is obtained by one of the other treatment devices 102, 104, 106, 107. In a second step the field data may be analyzed to identify critical weeds in the field data. Such step may be performed as described in the context of Fig. 15. Critical weed species/types may be those that have a high negative impact on yield and food safety, or they belong to the increasing number of herbicide resistant weeds. Depending on e.g. the geographical region, the crop and/or the specific field 112, the critical weed identifier(s) may be determined based on historical field data. Such historical data may be pre-analyzed prior to treatment operation on the field. Critical weed identifier(s) may be provided to the analysis unit prior to treatment of the field or prior to analysis.

The critical weed identifier(s) associated with the certain field location, e.g. the field section 113, is provided to the treatment device 102, 103, 104, 106, 107 with the critical herbicide product or with another treatment unit such as a mechanical treatment unit. The critical weed identifier(s) and the certain field location, e.g. the field section 113, are provided to the device for critical weed control.

The treatment unit 130 of the critical treatment device 102, 103, 104, 106, 107 is operated. The treatment unit 130 may comprise at least one spray nozzle 120, 122, 107a or at least one mechanical grabber, which may be activated.

Optionally the handover is confirmed for the triggering treatment device 102, 103, 104, 106, 107, 108. The weed treatment data and/or operation data of critical treatment device 102, 103, 104, 106, 107 may be updated on any treatment device 102, 103, 104, 106, 107, the cloud environment 100 or the ground station 110. The updated weed treatment data and/or operation data is provided to the critical treatment device 102, 103, 104, 106, 107. This may be done centrally or decentrally e.g. for all treatment devices 102, 103, 104, 106, 107.

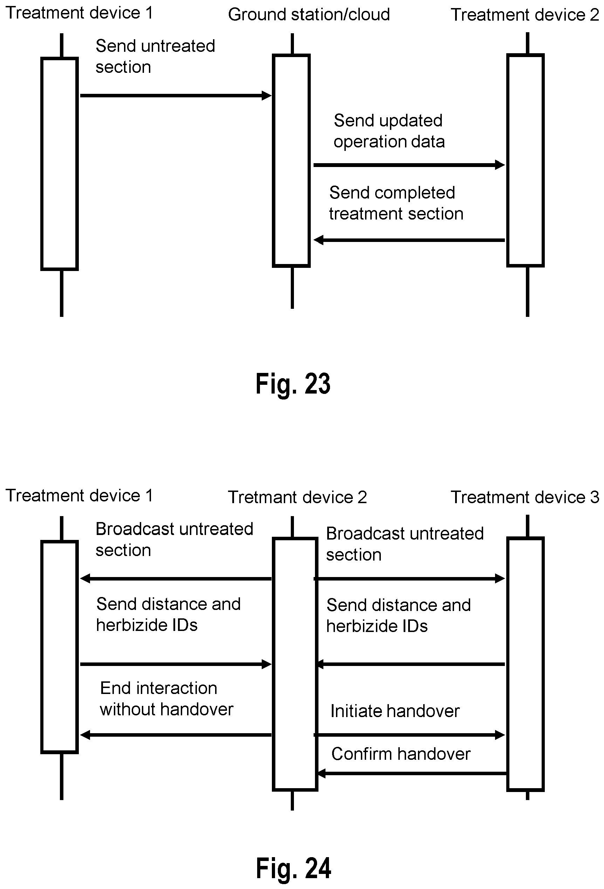

Fig. 23 illustrates a data flow diagram for handover in the central architecture.

As a first message, the first treatment device 102 pushes the field data for the untreated certain field location, e.g. field section 113, to the ground station 110. The ground station 110 determines based on the field data the available second treatment device 104 and updates the operation data. The updated operation data including the updated mission schedule is pushed to the second treatment device 104.

Once the treatment is completed the second treatment device 104 may push such update to the ground station 110 for updating the mission schedule tracking allocated and available devices. The updated schedule may be broadcasted by the ground station 110 to all treatment devices 102, 104, 106. Once the second treatment device 104 completed its mission the respective message may be sent to the ground station 110. Upon validation the ground station 110 sends a return to home command, such that the second treatment device 102 stops further activity.

Fig. 24 illustrates a data flow diagram for handover in the decentral architecture.

As a first message, the first treatment device 102 broadcasts the field data for the untreated certain field location, e.g. field section 113, to the other treatment devices 104, 106. The other treatment devices 104, 106 send their distance to the untreated field section 113 and their monitoring/treatment ID. The first treatment device 102 selects one other treatment device 104, 106 based on a cost function. Upon such selection the first treatment device initiates the handover with the selected treatment device 104, 106 and provides field data or operation data. The selected treatment device 104, 106 confirms such handover. To the non-selected treatment devices, the first treatment device broadcasts an end interaction message without handover.

The present disclosure has been described in conjunction with a preferred embodiment as examples as well. However, other variations can be understood and effected by those persons skilled in the art and practicing the claimed invention, from the studies of the drawings, this disclosure and the claims. Notably, in particular, the any steps presented can be performed in any order, i.e. the present invention is not limited to a specific order of these steps. Moreover, it is also not required that the different steps are performed at a certain place or at one node of a distributed system, i.e. each of the steps may be performed at a different nodes using different equipment/data processing units.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A computer-implemented method for controlling operation of multiple treatment devices (102, 103, 104, 107) having treatment device configurations different to each other for treating an agricultural field (112), the method comprising:
analyzing field data, monitored as at least one of the multiple treatment devices (102, 103, 104, 107) traverses the field, to identify weed present at a certain field location (113) of the field (112) by weed species; and
targeted instructing at least one treatment device (102, 103, 104, 107) among the multiple treatment devices (102, 103, 104, 107) that has a matching treatment device configuration for an identified weed species to treat the field (112) at the corresponding certain field location (113) against the identified weed species.

2. The method of claim 1, wherein the identified or identifiable weed species include monocotyledon weed, dicotyledon weed and/or critical weed non-treatable with selective herbicide but treatable with broadband herbicide, associated with and targeted and/or identified via a respective weed identifier.

3. The method of claim 2, wherein the targeted instructing comprises matching the respective weed identifier with the treatment device configurations of the multiple treatment devices to determine that treatment device having the matching treatment device configuration.

4. The method of any one of the preceding claims, wherein the treatment device configurations of the multiple treatment devices are associated with and targeted via a treatment device configuration identifier indicating treatability of a corresponding weed species.

5. The method of claim 4, wherein the targeted matching comprises matching the treatment device configuration identifier with the identified weed species to determine that treatment device having the matching treatment device configuration.

6. A method for weed treatment in an agricultural field (112), carried out by multiple treatment devices (102, 103, 104, 107) having treatment device configurations different to each other for treating the agricultural field (112), the method comprising:
providing a monocotyledon herbicide or a dicotyledon herbicide for a first treatment device of the multiple treatment devices (102, 103, 104, 107) or a critical weed herbicide for a second treatment device of the multiple treatment devices (102, 103, 104, 107); and
operating the first treatment device and/or the second treatment device provided with the respective herbicide according to the method of any one of claims 1 to 5.

7. A method for weed treatment in an agricultural field, the method comprising:
providing a monocotyledon, dicotyledon or critical weed herbicide as at least a part of a treatment device configuration for use in the method according to any one of claims 1 to 5.

8. A system for treating an agricultural field (112), comprising:
a plurality of treatment devices (102, 103, 104, 107) having treatment device configurations different to each other; and
a controller (100) configured to:
analyze field data, monitored as at least one of the plurality of treatment devices (102, 103, 104, 107) traverses the field, to identify weed present at a certain field location (113) of the field (112) by weed species; and
targeted instruct at least one of the plurality of treatment devices (102, 103, 104, 107) having a treatment device configuration that matches an identified weed species to treat the field (112) at the corresponding certain field location (113) against the identified weed species.

9. The system of claim 8, wherein a treatment device configuration of a respective treatment device of the plurality of treatment devices (102, 103, 104, 107) is associated with the treatment of monocotyledon weed, dicotyledon weed and/or critical weed non-treatable with selective herbicide but treatable with broadband herbicide, associated with and targeted via a respective weed identifier.

10. The system of claim 8 or 9, wherein the treatment device configurations of the multiple treatment devices (102, 103, 104, 107) are associated with and targeted via a treatment device configuration identifier indicating treatability of a corresponding weed species.

11. The system of any one of claims 8 to 10, wherein the controller (100) is at least partly arranged in a server or cloud environment (C) and/or a ground station (110) separated to the plurality of treatment devices (102, 103, 104, 107).

12. The system of any one of claims 8 to 11, wherein the controller (100) is at least partly arranged on-board with one or more of the plurality of treatment devices.

13. The system of any one of claims 8 to 12, wherein the treatment device configurations differ from each other in comprising a monocotyledon herbicide or a dicotyledon herbicide, or comprising a critical weed herbicide, a mechanical treatment unit or an electrical treatment unit.

14. The use of a treatment device (102, 103, 104, 107) comprising a monocotyledon herbicide, a dicotyledon herbicide, critical weed herbicide, a mechanical treatment unit or an electrical treatment unit in a method according to any one of claims 1 to 5, and/or in a system according to any one of claims 8 to 13.

15. A computer program element with instructions, which, when executed on a computing device, is configured to carry out the steps of the method according to any one of the claims 1 to 5, and/or to control a system according to any one of claims 8 to 13.
